(19) Europäisches Patentamt / European Patent Office / Office européen des brevets

(11) **EP 3 593 997 A2**

(12) **EUROPEAN PATENT APPLICATION**

(43) Date of publication:
15.01.2020 Bulletin 2020/03

(51) Int Cl.:
*B33Y 10/00* (2015.01)   *B29C 64/112* (2017.01)
*B29C 64/40* (2017.01)   *B33Y 30/00* (2015.01)
*B33Y 50/00* (2015.01)   *B33Y 80/00* (2015.01)

(21) Application number: **19159087.6**

(22) Date of filing: **25.02.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 28.02.2018   JP 2018034283
28.02.2018   JP 2018034535
30.01.2019   JP 2019014007

(71) Applicant: **Ricoh Company, Ltd.**
**Tokyo 143-8555 (JP)**

(72) Inventors:
• **KOIKE, Yuta**
**Tokyo, 143-8555 (JP)**

• **SUGIURA, Kenji**
**Tokyo, 143-8555 (JP)**
• **NAITO, Hiroyuki**
**Tokyo, 143-8555 (JP)**
• **OKADA, Noriaki**
**Tokyo, 143-8555 (JP)**
• **SHIMADA, Yoshihito**
**Tokyo, 143-8555 (JP)**
• **SAKURAI, Yoichi**
**Toyko, 143-8555 (JP)**
• **TANAKA, Kohichiroh**
**Tokyo, 143-8555 (JP)**

(74) Representative: **SSM Sandmair
Patentanwälte Rechtsanwalt
Partnerschaft mbB
Joseph-Wild-Straße 20
81829 München (DE)**

(54) **THREE-DIMENSIONAL OBJECT PRODUCING METHOD, THREE-DIMENSIONAL OBJECT PRODUCING APPARATUS, AND THREE-DIMENSIONAL OBJECT**

(57)   Provided is a three-dimensional object producing method including: a model portion forming step of forming a model portion (10) formed of a model portion material (1) over a stage (37); and a support portion forming step of forming a support portion (20) formed of a support portion material (2) at least over a surface of the stage (37) and at a part or all of a circumference of the model portion (10) in a plan-view perspective.

FIG. 1

**Description**

BACKGROUND OF THE INVENTION

Field of the Invention

The present disclosure relates to a three-dimensional object producing method, a three-dimensional object producing apparatus, and a three-dimensional object.

Description of the Related Art

Techniques referred to as additive manufacturing (AM) have been known as techniques for forming three-dimensional stereoscopic objects. Additive manufacturing techniques are techniques of calculating shapes of cross-sections thinly sliced with respect to the layer lamination direction and laminating layers each formed in accordance with the calculated shape, to form three-dimensional objects.

In recent years, among the additive manufacturing techniques, material jet methods of laminating layers of curable resins to form three-dimensional objects have been paid attention. According to the material jet methods, it is possible to form shapes that are, in principle, difficult to form (for example, shapes having an overhang portion), by forming a support portion configured to support a model portion when forming the model portion, which is the main body of the three-dimensional object.

In three-dimensional object forming techniques by material jet methods, various techniques for improving dimensional accuracy have been proposed. For example, there has been proposed an apparatus intended for increasing the resolution of an object forming material layer without decreasing the forming speed of the object forming material layer, by forming the contour of the object forming material layer at a higher resolution than the inside of the contour while forming the inside of the contour at a higher forming speed than the contour (for example, see International Publication No. WO 2015/049834).

The present disclosure has an object to provide a three-dimensional object producing method that can produce a three-dimensional object with little warpage.

SUMMARY OF THE INVENTION

A three-dimensional object producing method as a means of realizing the object includes a model portion forming step of forming a model portion formed of a model portion material over a stage, and a support portion forming step of forming a support portion formed of a support portion material at least over a surface of the stage and at a part or all of a circumference of the model portion in a plan-view perspective.

The present disclosure can provide a three-dimensional object producing method that can produce a three-dimensional object with little warpage.

BRIEF DESCRIPTION OF THE DRAWINGS

FIG. 1 is an exemplary diagram illustrating an example of a front view of a main part of a three-dimensional object producing apparatus;
FIG. 2A is an exemplary diagram of an example of three-dimensional model representation of a three-dimensional object to be formed;
FIG. 2B is an exemplary diagram illustrating an example of an object to be formed of a model portion and a support portion;
FIG. 2C is an exemplary diagram illustrating one cross-section of the object of FIG. 2B;
FIG. 3 is a block diagram illustrating an example of hardware and functions of a three-dimensional object producing apparatus;
FIG. 4A is a side view illustrating an example of a three-dimensional object as Embodiment 1-1;
FIG. 4B is a top view illustrating an example of a three-dimensional object as Embodiment 1-1;
FIG. 5A is a side view illustrating an example of a three-dimensional object as Embodiment 1-2;
FIG. 5B is a top view illustrating an example of a three-dimensional object as Embodiment 1-2;
FIG. 6A is a side view illustrating an example of a three-dimensional object as Embodiment 1-3;
FIG. 6B is a top view illustrating an example of a three-dimensional object as Embodiment 1-3;
FIG. 7A is a side view illustrating an example of a three-dimensional object as Embodiment 1-4;

FIG. 7B is a top view illustrating an example of a three-dimensional object as Embodiment 1-4;

FIG. 8A is a side view illustrating an example of a three-dimensional object as Embodiment 1-5;

FIG. 8B is a top view illustrating an example of a three-dimensional object as Embodiment 1-5;

FIG. 9A is a side view illustrating an example of a three-dimensional object as Embodiment 1-6;

FIG. 9B is a top view illustrating an example of a three-dimensional object as Embodiment 1-6;

FIG. 10 is a diagram illustrating an example of settings for locations of a model portion and a support portion;

FIG. 11A is a side view illustrating a three-dimensional object of Example 1;

FIG. 11B is a top view illustrating a three-dimensional object of Example 1;

FIG. 12A is a side view illustrating a three-dimensional object of Example 2;

FIG. 12B is a top view illustrating a three-dimensional object of Example 2;

FIG. 13A is a side view illustrating a three-dimensional object of Example 3;

FIG. 13B is a top view illustrating a three-dimensional object of Example 3;

FIG. 14A is a side view illustrating a three-dimensional object of Example 4;

FIG. 14B is a top view illustrating a three-dimensional object of Example 4;

FIG. 15A is a side view illustrating a three-dimensional object of Comparative Example 1;

FIG. 15B is a top view illustrating a three-dimensional object of Comparative Example 1;

FIG. 16A is a side view illustrating an example of a three-dimensional object as Embodiment 1-7;

FIG. 16B is a top view illustrating an example of a three-dimensional object as Embodiment 1-7;

FIG. 17A is a side view illustrating an example of a three-dimensional object as Embodiment 1-8;

FIG. 17B is a top view illustrating an example of a three-dimensional object as Embodiment 1-8;

FIG. 18A is a side view illustrating an example of a three-dimensional object as Embodiment 1-9;

FIG. 18B is a top view illustrating an example of a three-dimensional object as Embodiment 1-9;

FIG. 19A is a side view illustrating an example of a three-dimensional object as Embodiment 1-10;

FIG. 19B is a top view illustrating an example of a three-dimensional object as Embodiment 1-10;

FIG. 20A is a side view illustrating an example of a three-dimensional object as Embodiment 1-11;

FIG. 20B is a top view illustrating an example of a three-dimensional object as Embodiment 1-11;

FIG. 21A is a side view illustrating an example of a three-dimensional object as Embodiment 1-12;

FIG. 21B is a top view illustrating an example of a three-dimensional object as Embodiment 1-12;

FIG. 22A is a side view illustrating an example of a three-dimensional object as Embodiment 1-13;

FIG. 22B is a top view illustrating an example of a three-dimensional object as Embodiment 1-13;

FIG. 23A is a side view illustrating an example of a three-dimensional object as Embodiment 1-14;

FIG. 23B is a top view illustrating an example of a three-dimensional object as Embodiment 1-14;

FIG. 24 is a schematic view illustrating a process of producing a three-dimensional object 1 of Example 5;

FIG. 25 is a schematic view illustrating a three-dimensional object 1 of Example 5;

FIG. 26 is a schematic view illustrating a process of producing a three-dimensional object 2 of Example 6;

FIG. 27 is a schematic view illustrating a three-dimensional object 2 of Example 6;

FIG. 28 is a schematic view illustrating a process of producing a three-dimensional object 3 of Comparative Example 2;

FIG. 29 is a schematic view illustrating a three-dimensional object 3 of Comparative Example 2;

FIG. 30 is a schematic view illustrating a process of producing a three-dimensional object 4 of Comparative Example 3;

FIG. 31 is a schematic view illustrating a three-dimensional object 4 of Comparative Example 3;

FIG. 32 is a block diagram illustrating an example of a hardware configuration of an object formation data generating apparatus; and

FIG. 33 is a flowchart illustrating an example of a process for generating three-dimensional object production data.

DESCRIPTION OF THE EMBODIMENTS

Specific embodiments of a three-dimensional object producing method of the present disclosure and a producing apparatus (may also be referred to as object forming apparatus herein) configured to carry out the producing method will be described below. However, the present disclosure should not be construed as being limited to these embodiments.

(First embodiment)

(Three-dimensional object producing method, three-dimensional object producing apparatus, and three-dimensional object)

A three-dimensional object producing method according to the first embodiment includes a model portion forming step of forming a model portion formed of a model portion material over a stage and a support portion forming step of forming a support portion formed of a support portion material at least over a surface of the stage and at a part

3

or all of a circumference of the model portion in a plan-view perspective, and further includes other steps as needed.

A three-dimensional object producing apparatus according to the first embodiment includes a model portion forming unit configured to form a model portion formed of a model portion material over a stage and a support portion forming unit configured to form a support portion formed of a support portion material at least over a surface of the stage and at a part or all of a circumference of the model portion in a plan-view perspective, and further includes other units as needed.

The three-dimensional object producing method can be suitably performed by the three-dimensional object producing apparatus. The model portion forming step can be suitably performed by the model portion forming unit. The support portion forming step can be suitably performed by the support portion forming unit. The other steps can be performed by the other units.

Accordingly, the three-dimensional object producing apparatus according to the first embodiment operates as an apparatus configured to carry out the three-dimensional object producing method according to the first embodiment. That is, the three-dimensional object producing apparatus according to the first embodiment is the same as carrying out the three-dimensional object producing method according to the first embodiment. Hence, details of the producing method according to the first embodiment will also be specified through description mainly on the three-dimensional object producing apparatus according to the first embodiment. Besides, a three-dimensional object according to the first embodiment is a result of the three-dimensional object producing method according to the first embodiment. Hence, the three-dimensional object according to the first embodiment will also be specified through description on the three-dimensional object producing apparatus according to the first embodiment.

Here, a model portion is a portion that forms a three-dimensional object according to the first embodiment, and refers to a cured product of a model portion material. The shape of the model portion is not particularly limited and may be appropriately selected depending on the intended purpose. Examples of the shape of the model portion include a film and a layer.

According to existing techniques, a support portion is disposed at a position to support a model portion against the gravity direction in order to hold a three-dimensional object at a predetermined position until the model portion cures. The support portion functions by contacting the model portion and supporting the model portion from below the model portion. In addition to this function, the support portion according to the first embodiment is brought into adhesion with a part or all of the circumference of a model portion to suppress warpage of the model portion due to an internal stress when the model portion material cures.

The support portion refers to a cured product of a support portion material. The shape of the support portion is not particularly limited and may be appropriately selected depending on the intended purpose. Examples of the shape of the support portion include a film and a layer.

The model portion material and the support portion material used are such materials that make adhesiveness of a model portion with a stage higher than adhesiveness of a support portion with the stage. Details of the model portion material and support portion material will be described below.

The first embodiment is based on a finding that existing three-dimensional object forming techniques by material jet methods can provide a high dimensional accuracy to an object forming material layer immediately after formed, but problematically tend to have the three-dimensional object warp in the middle of forming the whole three-dimensional object or after the whole three-dimensional object is formed.

Specifically, according to the three-dimensional object forming techniques by material jet methods, internal stress that occurs when a film formed of the model portion material is cured accumulates to make a three-dimensional object likely to warp. The reason is as follows. A film formed of the model portion material has a high elastic modulus in order to secure strength of a three-dimensional object. The model portion material and the support portion material shrink when cured during or after object formation or when cooled. Here, because the elastic modulus of the model portion material increases by curing, internal stress due to shrinkage accumulates without being relaxed, causing the model portion material to warp. On the other hand, because the elastic modulus of a support portion is lower than the elastic modulus of a model portion, internal stress due to shrinkage tends to be relaxed, suppressing occurrence of warpage of the support portion. Hence, the three-dimensional object producing method according to the first embodiment can produce a three-dimensional object with little warpage by forming the three-dimensional object while locating a support portion having a relatively less warpage during formation in a manner to secure a model portion.

<Model portion forming unit>

The model portion forming unit is configured to form a model portion formed of the model portion material over a stage.

The model portion forming unit is not particularly limited and may be appropriately selected depending on the intended purpose. Examples of the model portion forming unit include an inkjet-type discharging head unit.

The model portion forming unit performs forming a model portion a plurality of times to laminate model portions and form a three-dimensional object.

«Three-dimensional object»

A three-dimensional object is not particularly limited and may be appropriately selected depending on the intended purpose. Examples of the three-dimensional object include prototypes of industrial products, dies used for injection molding and press molding, jigs and tools, and architects' models.

«Stage»

The stage is a place over which model portions and support portions are laminated to have a three-dimensional object being formed or to have a completed three-dimensional object.
The stage is not particularly limited and may be appropriately selected depending on the intended purpose so long as the stage can support a three-dimensional object being formed or completed.
The shape and size of the stage are not particularly limited and may be appropriately selected depending on the intended purpose, so long as the stage can support a three-dimensional object being formed or completed. A flat plate shape that is set in parallel with a horizontal plane is preferable in terms of stably placing a three-dimensional object being formed or completed over the stage.
The structure and material of the stage are not particularly limited and may be appropriately selected depending on the intended purpose, so long as it is ensured that the adhesive force of a model portion with the surface of the stage is higher than the adhesive force of a support portion with the surface of the stage.

<Support portion forming unit>

The support portion forming unit is configured to form a support portion formed of the support portion material at least over the surface of the stage and at a part or all of a circumference of a model portion in a plan-view perspective.
The support portion forming unit is not particularly limited and may be appropriately selected depending on the intended purpose. Examples of the support portion forming unit include an inkjet-type discharging head unit.
A model portion in a plan-view perspective refers to a model portion formed over the stage when the stage is seen from above in the vertical direction, when the stage has, for example, a flat plate shape set in parallel with a horizontal plane.
The support portion forming unit forms a support portion formed of the support portion material at least over the surface of the stage and at a part or all of the circumference of a model portion in a plan-view perspective, and brings the support portion into adhesion with the part or all of the circumference of the model portion. Hence, the support portion forming unit can suppress warpage of the model portion material due to internal stress when the model portion material is cured. When model portions that should be suppressed from warping are thick as a result of lamination, it may be possible to also laminate support portions in order to provide an appropriate thickness.
By forming a support portion at a part or all of the circumference of a model portion, the support portion forming unit can suppress occurrence of so-called "burr", which is an unneeded portion of the model portion material hanging out from a desired model material forming region.
In another mode, the support portion forming unit may form a support portion formed of the support portion material between a model portion disposed over the stage and the surface of the stage. In this case, an anchor portion formed of the model portion material may be formed at least over the surface of the stage in a manner to penetrate the support portion. This brings the model portion positioned at the bottom of a three-dimensional object into adhesion with the stage via the anchor portion, making it possible to suppress warpage of the model portion during object formation. Moreover, because the support portion, which is to be removed in a removing step described below, is present between the model portion positioned at the bottom of the three-dimensional object and the stage, it is easy to detach the three-dimensional object from the stage.
The method for forming a model portion, a support portion, or an anchor portion is not particularly limited and may be appropriately selected depending on the purpose. Examples of the method include a method of discharging and curing the model portion material or the support portion material.
Examples of the method for discharging the model portion material or the support portion material include a discharging method by an inkjet method.
Examples of the method for curing the model portion material or the support portion material include a method of applying energy such as light and heat to the model portion material or the support portion material when the model portion material and the support portion material have photocurability or a thermosetting property.
As the method for applying energy such as light and heat, examples of an ultraviolet irradiator include an ultraviolet (UV) irradiation lamp and electron beams. It is preferable that a mechanism configured to remove ozone be provided in addition to these energy applying units.

Examples of the kind of the ultraviolet (UV) irradiation lamp include a high-pressure mercury lamp, an ultrahigh-pressure mercury lamp, metal halides, and a LED.

The ultrahigh-pressure mercury lamp is a point light source. However, a Deep UV type ultrahigh-pressure mercury lamp combined with an optical system for a higher light utilization efficiency is capable of irradiation in a short-wavelength range.

The metal halides having a wide wavelength range are effective for colored materials, and are formed of halides of metals such as Pb, Sn, and Fe. Metal halides can be selected depending on the absorption spectrum of a polymerization initiator.

The lamp used for curing is not particularly limited and may be appropriately selected depending on the intended purpose. For example, commercially available products such as H LAMP, D LAMP, and V LAMP available from Fusion System Japan Co., Ltd. may be used.

When a radical polymerizable monomer or oligomer is used as a curable liquid material, it is preferable that the oxygen concentration in the environment in which film formation and the curing step are performed be low. A space purged with, for example, nitrogen is particularly preferable.

An elastic modulus ratio between the model portion material and the support portion material is preferably 20:1 or higher but 60:1 or lower and more preferably 40:1 or higher but 60:1 or lower. The elastic modulus ratio in the preferable range is advantageous in terms of reducing the warpage of the model material by the support material.

Examples of the method for measuring the elastic modulus include a calculation method based on evaluation of a stress-strain characteristic using a universal tester.

<Other units>

The other units are not particularly limited and may be appropriately selected depending on the intended purpose. It is preferable that the other units include an anchor portion forming unit, and may include a support portion removing unit, a three-dimensional object polishing unit, and a three-dimensional object cleaning unit. It is also preferable to include a foundation forming unit among the other units.

«Anchor portion forming unit»

When a support portion is formed at least over the surface of the stage and at a part or all of the circumference of a model portion in a plan-view perspective, it is preferable that an anchor portion forming unit be configured to form an anchor portion formed of the model portion material at least over the surface of the stage in a manner to penetrate the support portion. In this way, because the anchor portion formed of the model portion material is more difficult than the support portion to detach from the surface of the stage, the anchor portion penetrating the support portion can suppress the support portion from being detached from the surface of the stage. This makes it possible to suppress the model portion, which is in adhesion with the support portion, from warping.

Further, also when a support portion is formed between a model portion and the stage, it is preferable that the anchor portion forming unit form an anchor portion formed of the model portion material at least over the surface of the stage in a manner to penetrate the support portion. This makes it possible to suppress the model portion, which is in adhesion with the support portion, from warping, like as described above.

In another embodiment, the model portion forming unit may form a model portion formed of the model portion material over the stage, the support portion forming unit may form a support portion formed of the support portion material between the model portion located over the stage and the surface of the stage, and the anchor portion forming unit may form an anchor portion formed of the model portion material at least over the surface of the stage in a manner that the anchor portion penetrates the support portion. This brings the anchor portion penetrating the support portion into adhesion with the surface of the stage and the model portion, making it possible to suppress warpage of the model portion.

«Foundation forming unit»

The foundation forming unit is configured to form a foundation formed of the model portion material over the stage between a model portion and the surface of the stage. In this case, when a support portion is further formed between the model portion and the foundation by the support portion forming unit, i.e., when a foundation, a support portion, and a three-dimensional object are laminated in this order over the stage, the three-dimensional object can be protected when the three-dimensional object is detached from the stage, and the whole three-dimensional object can be easily detached from the stage.

The foundation is a cured product of the model portion material, and can be easily detached from the stage using, for example, a spatula.

The shape of the foundation is not particularly limited and may be appropriately selected depending on the intended purpose. Examples of the shape of the foundation include a film shape or a layer shape.

A support portion removing unit is a unit configured to remove a support portion from a three-dimensional object formed of a model portion and a support portion formed.

As the support portion removing unit, for example, a trimming mechanism, a mechanism configured to dissolve a support portion in a liquid, a mechanism configured to immerse a support portion in a liquid to remove the support portion, a temperature applying mechanism, an ultrasonic vibration mechanism, and a mechanism configured to apply energy produced by stirring may be used. These mechanisms may be used in appropriate combinations. Among these mechanisms, the unit configured to dissolve a support portion in a liquid is preferable and a method of immersing a support portion in a liquid to dissolve the support portion is more preferable.

Examples of the liquid in which a support portion is immersed include water and an organic solvent.

It is preferable that the three-dimensional object producing apparatus be heater-less and be capable of forming an object at normal temperature.

In the following description, details of the model portion material and the support portion material will be described.

<<<Model portion material>>>

The model portion material forms an object forming layer constituting a model portion. In the first embodiment, a model portion refers to a portion constituting a main body that forms a three-dimensional object according to the first embodiment.

The model portion material is not particularly limited and may be appropriately selected depending on the intended purpose so long as the model portion material is a liquid that cures when energy such as light and heat is applied. The model portion material preferably contains a polymerizable monomer such as a monofunctional monomer and a multifunctional monomer, an oligomer, and a photopolymerization initiator, and further contains other components as needed.

It is preferable that the model portion material have physical properties as a liquid, such as a viscosity and a surface tension that enable discharging of the model portion material by an object forming material discharging head used in, for example, an inkjet printer.

-Polymerizable monomer-

Examples of the polymerizable monomer include a monofunctional monomer and a multifunctional monomer.

One of these polymerizable monomers may be used alone or two or more of these polymerizable monomers may be used in combination.

--Monofunctional monomer--

Examples of the monofunctional monomer include acrylamide, N-substituted acrylamide derivatives, N,N-disubstituted acrylamide derivatives, N-substituted methacrylamide derivatives, N,N-disubstituted methacrylamide derivatives, and acrylic acid. One of these monofunctional monomers may be used alone or two or more of these monofunctional monomers may be used in combination. Among these monofunctional monomers, acrylamide, N,N-dimethyl acrylamide, N-isopropyl acrylamide, acryloylmorpholine, hydroxyethyl acrylamide, and isobornyl (meth)acrylate are preferable.

Monofunctional monomers other than the monofunctional monomers presented above are not particularly limited and may be appropriately selected depending on the intended purpose. Examples of the monofunctional monomers include 2-ethyl hexyl (meth)acrylate, 2-hydroxyethyl (meth)acrylate, 2-hydroxypropyl (meth)acrylate, caprolactone-modified tetrahydrofurfuryl (meth)acrylate, 3-methoxybutyl (meth)acrylate, tetrahydrofurfuryl (meth)acrylate, lauryl (meth)acrylate, 2-phenoxyethyl (meth)acrylate, isodecyl (meth)acrylate, isooctyl (meth)acrylate, tridecyl (meth)acrylate, caprolactone (meth)acrylate, and ethoxylated nonyl phenol (meth)acrylate.

--Multifunctional monomer--

The multifunctional monomer is not particularly limited and may be appropriately selected depending on the intended purpose. Examples of the multifunctional monomer include bifunctional monomers and trifunctional or higher monomers. One of these multifunctional monomers may be used alone or two or more of these multifunctional monomers may be used in combination.

Examples of the bifunctional monomer include tripropylene glycol di(meth)acrylate, triethylene glycol di(meth)acrylate, tetraethylene glycol di(meth)acrylate, polypropylene glycol di(meth)acrylate, neopentyl glycol hydroxypivalic acid ester di(meth)acrylate, hydroxypivalic acid neopentyl glycol ester di(meth)acrylate, 1,3-butanediol di(meth)acrylate, 1,4-butanediol di(meth)acrylate, 1,6-hexanediol di(meth)acrylate, 1,9-nonanediol di(meth)acrylate, diethylene glycol di(meth)acrylate, neopentyl glycol di(meth)acrylate, tripropylene glycol di(meth)acrylate, caprolactone-modified hydroxypivalic acid neopentyl glycol ester di(meth)acrylate, propoxylated neopentyl glycol di(meth)acrylate, ethoxy-modified bisphenol A di(meth)acrylate, polyethylene glycol 200 di(meth)acrylate, and polyethylene glycol 400 di(meth)acrylate. One of these bifunctional monomers may be used alone or two or more of these bifunctional monomers may be used in combination.

Examples of the trifunctional or higher monomers include trimethylolpropane tri(meth)acrylate, pentaerythritol tri(meth)acrylate, dipentaerythritol hexa(meth)acrylate, triallyl isocyanurate, ε-caprolactone-modified dipentaerythritol tri(meth)acrylate, ε-caprolactone-modified dipentaerythritol tetra(meth)acrylate, ε-caprolactone-modified dipentaerythritol penta(meth)acrylate, ε-caprolactone-modified dipentaerythritol hexa(meth)acrylate, tris(2-hydroxyethyl) isocyanurate tri(meth)acrylate, ethoxylated trimethylolpropane tri(meth)acrylate, propoxylated trimethylolpropane tri(meth)acrylate, propoxylated glyceryl tri(meth)acrylate, pentaerythritol tetra(meth)acrylate, ditrimethylolpropane tetra(meth)acrylate, dipentaerythritol hydroxypenta(meth)acrylate, ethoxylated pentaerythritol tetra(meth)acrylate, and penta(meth)acrylate ester. One of these trifunctional or higher monomers may be used alone or two or more of these trifunctional or higher monomers may be used in combination.

-Oligomer-

As the oligomer, one may be used alone or two or more may be used in combination among low polymers of the above-presented monomers and the above-presented monomers that contain a reactive unsaturated binding group at an end.

-Photopolymerization initiator-

As the photopolymerization initiator, an arbitrary substance that produces radicals when irradiated with light (particularly, ultraviolet rays having a wavelength of from 220 nm through 400 nm) can be used.

Examples of the photopolymerization initiator include acetophenone, 2, 2-diethoxyacetophenone, p-dimethyl aminoacetophenone, benzophenone, 2-chlorobenzophenone, p,p'-dichlorobenzophenone, p,p-bisdiethyl aminobenzophenone, Michler's ketone, benzyl, benzoin, benzoin methyl ether, benzoin ethyl ether, benzoin isopropyl ether, benzoin-n-propyl ether, benzoin isobutyl ether, benzoin-n-butyl ether, benzyl methyl ketal, thioxanthone, 2-chlorothioxanthone, 2-hydroxy-2-methyl-1-phenyl-1-one, 1-(4-isopropylphenyl)2-hydroxy-2-methyl propan-1-one, methyl benzoyl formate, 1-hydroxycyclohexyl phenyl ketone, azobis isobutyronitrile, benzoyl peroxide, and di-tert-butyl peroxide. One of these photopolymerization initiators may be used alone or two or more of these photopolymerization initiators may be used in combination.

-Other components-

The other components are not particularly limited and may be appropriately selected depending on the intended purpose. Examples of the other components include a surfactant, a polymerization inhibitor, and a colorant.

--Surfactant--

Examples of the surfactant include surfactants having a molecular weight of 200 or higher but 5,000 or less, specifically, PEG-type nonionic surfactants [e.g., adduct of nonyl phenol with from 1 moles through 40 moles of ethylene oxide (hereinafter abbreviated as EO) and adduct of stearic acid with from 1 mole through 40 moles of EO], polyvalent alcohol-type nonionic surfactants (e.g., sorbitan palmitic acid monoester and sorbitan stearic acid triester), fluorine-containing surfactants (e.g., adduct of perfluoroalkyl with from 1 mole through 50 moles of EO, perfluoroalkyl carboxylic acid salt, and perfluoroalkyl betaine), and modified silicone oils [polyether-modified silicone oils and (meth)acrylate-modified silicone oils]. One of these surfactants may be used alone or two or more of these surfactants may be used in combination.

--Polymerization inhibitor--

Examples of the polymerization inhibitor include phenol compounds [e.g., hydroquinone, hydroquinone monomethyl ether, 2,6-di-t-butyl-p-cresol, 2,2-methylene-bis-(4-methyl-6-t-butyl phenol), and 1,1,3-tris-(2-methyl-4-hydroxy-5-t-butyl phenyl)butane], sulfur compounds [e.g., dilauryl thiodipropionate], phosphorus compounds [e.g., triphenyl phosphite], and amine compounds [e.g., phenothiazine]. One of these polymerization inhibitors may be used alone or two or more of these polymerization inhibitors may be used in combination.

--Colorant--

As the colorant, dyes and pigments that dissolve or stably disperse in the model portion material and have an excellent thermal stability are suitable. Among these dyes and pigments, solvent dyes are preferable. Further, two or more colorants may be timely mixed for, for example, color adjustment.

The viscosity of the model portion material is preferably 5 mPa·s or higher and 20 mPa·s or lower and more preferably 9 mPa·s or higher but 13 mPa·s or lower.

During formation of a three-dimensional object, it is possible to adjust the viscosity of the model portion material by adjusting the temperature of, for example, a heater and a pre-heater.

<<<Support portion material>>>

The support portion material forms an object forming layer constituting a support portion. It is preferable that a support portion dissolve in a liquid. It is more preferable that a support portion dissolve when immersed in a liquid. Examples of the liquid include water and an organic solvent.

It is preferable that the support portion material according to the first embodiment have water disintegrability.

Water disintegrability refers to failure of a cured product to maintain the initial shape and properties when immersed in water, resulting in breaking into fine pieces.

It is preferable that the support portion material according to the first embodiment satisfy the following condition.

[Condition]

A cured product having a size of 20 mm in length, 20 mm in width, and 5 mm in height and obtained by irradiating the support portion material with 500 mJ/cm$^2$ of ultraviolet rays using an ultraviolet irradiator becomes a solid having a size of 1 mm or less in at least one dimension or completely dissolves when immersed in water (20 mL) and left to stand still at 25 degrees C for 1 hour.

The cured product having a size of 20 mm in length, 20 mm in width, and 5 mm in height can be produced in the manner described below.

The support portion material is poured into a silicone rubber die having a size of 20 mm in length, 20 mm in width, and 5 m in height and irradiated with ultraviolet rays at an irradiation level of 500 mJ/cm$^2$ (at an illuminance of 100 mW/cm$^2$, for an irradiation time of 5 seconds) using an ultraviolet irradiator (apparatus name: SUBZERO-LED, available from Integration Technology Ltd.). In this way, a support portion material (2 g), which is a cured product having a size of 20 mm in length, 20 mm in width, and 5 mm in height, can be obtained.

It is preferable that the support portion material according to the first embodiment satisfy the following condition.

[Condition]

A cured product obtained by irradiating the support portion material with 500 mJ/cm$^2$ of ultraviolet rays using an ultraviolet irradiator is a solid having a compressive stress of 2.0 kPa or higher when compressed by 1% in an environment of 25 degrees C, and the volume of a residue of the solid when the solid (2 g) is put in water (20 mL) and left to stand still at 25 degrees C for 1 hour is 50% by volume or less.

The volume of the residue of the solid can be measured by the Archimedes' method.

When the cured product obtained by irradiating the support portion material with 500 mJ/cm$^2$ of ultraviolet rays using an ultraviolet irradiator satisfies each of the conditions, the support portion material for shape support can have improved functions.

It is preferable that the cured product obtained by irradiating the support portion material with 500 mJ/cm$^2$ of ultraviolet rays using an ultraviolet irradiator have a compressive stress of 0.5 kPa or higher when compressed by 1% in an environment of 25 degrees C. When the cured product has a compressive stress of 0.5 kPa or higher when compressed by 1%, the support portion material for shape support can have improved functions.

The compressive stress in response to compression by 1% is also dependent on, for example, the size of the model material that needs shape support. When the size of the model material is large, the compressive stress is preferably 2.0 kPa or higher in terms of shape support.

The compressive stress in response to compression by 1% can be measured using a universal tester (precision universal tester AG-I, available from Shimadzu Corporation, with a load cell of 1 kN and a compression jig for 1 kN).

The ultraviolet irradiator is not particularly limited and may be appropriately selected depending on the intended purpose.

It is preferable that the illuminance be 100 mW/cm$^2$ and the irradiation time be 5 seconds at an irradiation level of 500 mJ/cm$^2$.

The support portion material according to the first embodiment contains a monomer (A) having a hydrogen bonding capacity, a solvent (B) having a hydrogen bonding capacity, and a polymerization initiator (C). The solvent (B) having a hydrogen bonding capacity is at least one selected from the group consisting of diols containing 3 or more but 6 or less carbon atoms, carboxylic acid compounds, amine compounds, ester compounds, ketone compounds, and urea compounds. The support portion material contains other components as needed.

<Monomer (A) having hydrogen bonding capacity>

The monomer (A) having a hydrogen bonding capacity is not particularly limited and may be appropriately selected depending on the intended purpose so long as the monomer (A) has a hydrogen bonding capacity. Examples of the monomer (A) having a hydrogen bonding capacity include monofunctional monomers and multifunctional monomers. One of these monomers may be used alone or two or more of these monomers may be used in combination. Among these monomers, monofunctional monomers are preferable in terms of improving water disintegrability of a cured product.

Examples of the monomer (A) having a hydrogen bonding capacity include monomers containing, for example, an amide group, an amino group, a hydroxyl group, a tetramethyl ammonium group, a silanol group, an epoxy group, and a sulfo group.

Examples of the polymerization reaction of the monomer (A) having a hydrogen bonding capacity include radical polymerization, ionic polymerization, coordination polymerization, and ring-opening polymerization. Among these polymerization reactions, radical polymerization is preferable in terms of control on the polymerization reaction. Therefore, the monomer (A) having a hydrogen bonding capacity is preferably an ethylenic unsaturated monomer, more preferably a water-soluble monofunctional ethylenic unsaturated monomer or a water-soluble multifunctional ethylenic unsaturated monomer, and in terms of improving water disintegrability of a cured product, particularly preferably a water-soluble monofunctional ethylenic unsaturated monomer.

«Water-soluble monofunctional ethylenic unsaturated monomer having hydrogen bonding capacity»

Examples of the water-soluble monofunctional ethylenic unsaturated monomer having a hydrogen bonding capacity include: monofunctional vinyl amide group-containing monomers [e.g., N-vinyl-ε-caprolactam, N-vinylformamide, and N-vinylpyrrolidone]; monofunctional hydroxyl group-containing (meth)acrylates [e.g., hydroxyethyl (meth)acrylate, hydroxypropyl (meth)acrylate, and 4-hydroxybutyl (meth)acrylate]; hydroxyl group-containing (meth)acrylates [e.g., polyethylene glycol mono(meth)acrylate, monoalkoxy (C1 through C4) polyethylene glycol mono(meth)acrylate, polypropylene glycol mono(meth)acrylate, monoalkoxy (C1 through C4) polypropylene glycol mono(meth)acrylate, and mono(meth)acrylates of PEG-PPG block polymers]; (meth)acrylamide derivatives [e.g., (meth)acrylamide, N-methyl (meth)acrylamide, N-ethyl (meth)acrylamide, N-propyl (meth)acrylamide, N-butyl (meth)acrylamide, N,N'-dimethyl (meth)acrylamide, N-hydroxyethyl (meth)acrylamide, N-hydroxypropyl (meth)acrylamide, and N-hydroxybutyl (meth)acrylamide], and (meth)acryloylmorpholine. One of these water-soluble monofunctional ethylenic unsaturated monomers having a hydrogen bonding capacity may be used alone or two or more of these water-soluble monofunctional ethylenic unsaturated monomers having a hydrogen bonding capacity may be used in combination. Among these water-soluble monofunctional ethylenic unsaturated monomers having a hydrogen bonding capacity, (meth)acrylate and (meth)acrylamide derivatives are preferable in terms of photoreactivity, hydroxyethyl acrylate, hydroxypropyl acrylate, 4-hydroxybutyl acrylate, acrylamide, acryloylmorpholine, N-methyl acrylamide, N-ethyl acrylamide, N-propyl acrylamide, N-butyl acrylamide, N,N'-dimethyl acrylamide, N-hydroxyethyl acrylamide, N-hydroxypropyl acrylamide, N-hydroxybutyl acrylamide, and diethyl acrylamide are more preferable, and acryloylmorpholine (with a molecular weight of 141.17) and N-hydroxyethyl acrylamide (with a molecular weight of 115.15) are particularly preferable in terms of a low skin irritativeness to human bodies. «Water-soluble multifunctional ethylenic unsaturated monomer having hydrogen bonding capacity»

Examples of the water-soluble multifunctional ethylenic unsaturated monomer having a hydrogen bonding capacity include: bifunctional group monomers such as tripropylene glycol di(meth)acrylate, triethylene glycol di(meth)acrylate, tetraethylene glycol di(meth)acrylate, polypropylene glycol di(meth)acrylate, neopentyl glycol hydroxypivalic acid ester di(meth)acrylate (MANDA), hydroxypivalic acid neopentyl glycol ester di(meth)acrylate (HPNDA), 1,3-butanediol di(meth)acrylate (BGDA), 1,4-butanediol di(meth)acrylate (BUDA), 1,6-hexanediol di(meth)acrylate (HDDA), 1,9-nonanediol di(meth)acrylate, diethylene glycol di(meth)acrylate (DEGDA), neopentyl glycol di(meth)acrylate (NPGDA), tripropylene glycol di(meth)acrylate (TPGDA), caprolactone-modified hydroxypivalic acid neopentyl glycol ester di(meth)acrylate, propoxylated neopentyl glycol di(meth)acrylate, polyethylene glycol 200 di(meth)acrylate, and polyethylene glycol 400 di(meth)acrylate; and trifunctional or higher monomers such as triallyl isocyanate, and tris(2-hydroxyethyl)isocyanurate tri(meth)acrylate. One of these water-soluble multifunctional ethylenic unsaturated monomers having a hydrogen bonding capacity may be used alone or two or more of these water-soluble multifunctional ethylenic unsaturated monomers having a hydrogen bonding capacity may be used in combination.

The molecular weight of the monomer (A) having a hydrogen bonding capacity is preferably 70 or greater but 2,000 or less and more preferably 100 or greater but 500 or less. When the molecular weight of the monomer (A) having a hydrogen bonding capacity is 70 or greater but 2,000 or less, the monomer (A) having a hydrogen bonding capacity can be adjusted to the optimum viscosity for an inkjet method.

The content of the monomer (A) having a hydrogen bonding capacity is preferably 30% by mass or greater but 60% by mass or less relative to the total amount of the support portion material. When the content of the monomer (A) having a hydrogen bonding capacity is 30% by mass or greater but 60% by mass or less, compressive stress and water disintegrability sufficient as the support portion material for shape support can be satisfied simultaneously.

<Solvent (B) having hydrogen bonding capacity>

The solvent (B) having a hydrogen bonding capacity has a hydrogen bonding capacity with the monomer (A) having a hydrogen bonding capacity, and can exhibit the function as the support portion material for shape support by forming a hydrogen bond with the monomer (A) having a hydrogen bonding capacity.

The solvent (B) having a hydrogen bonding capacity is at least one selected from the group consisting of diols containing 3 or more but 6 or less carbon atoms, carboxylic acid compounds, amine compounds, ester compounds, ketone compounds, and urea compounds. Among these solvents, diols having 3 or more but 6 or less carbon atoms are preferable.

«Diols having 3 or more but 6 or less carbon atoms»

It is preferable that the diols having 3 or more but 6 or less carbon atoms be nonreactive with water-soluble acrylic monomers, not inhibit radical polymerization reaction during photo-curing, have fluidity at normal temperature, and be a water-soluble material.

As the diols having 3 or more but 6 or less carbon atoms, both of a monofunctional diol and a multifunctional diol can be used.

Examples of the diols having 3 or more but 6 or less carbon atoms include propanediol, butanediol, pentanediol, and hexanediol. One of these diols having 3 or more but 6 or less carbon atoms may be used alone or two or more of these diols having 3 or more but 6 or less carbon atoms may be used in combination. Among these diols having 3 or more but 6 or less carbon atoms, 1,3-propanediol, 1,4-butanediol, 1,5-pentanediol, and 1,6-hexanediol are preferable.

The number of carbon atoms is 3 or more but 6 or less and preferably 3 or more but 5 or less. When the number of carbon atoms is 3 or more, compressive stress in response to compression by 1% can be improved. When the number of carbon atoms is 6 or less, the viscosity of the support portion material can be suppressed.

The carbon chain of the diols having 3 or more but 6 or less carbon atoms may be a straight chain or may be branched.

«Carboxylic acid compounds»

Examples of the carboxylic acid compounds include: straight-chain aliphatic acids such as formic acid, acetic acid, propionic acid, butanoic acid, pentanoic acid, and hexyl acid; various branched aliphatic carboxylic acids such as isobutyric acid, t-butyric acid, isopentyl acid, isooctylic acid, and 2-ethyl hexyl acid; aromatic carboxylic acids such as benzoic acid and benzene sulfonic acid; and hydroxycarboxylic acid such as glycolic acid and lactic acid. One of these carboxylic acid compounds may be used alone or two or more of these carboxylic acid compounds may be used in combination. Among these carboxylic acid compounds, acetic acid, propionic acid, butanoic acid, and lactic acid are preferable and butanoic acid and lactic acid are more preferable in terms of water solubility.

«Amine compounds»

Examples of the amine compounds include: primary to tertiary amines such as monoalkyl amine, dialkyl amine, and trialkyl amine; divalent amines such as ethylene diamine; trivalent amines such as triethylene diamine; and aliphatic amines such as pyridine and aniline. One of these amine compounds may be used alone or two or more of these amine compounds may be used in combination. Among these amine compounds, divalent or trivalent primary amines are preferable and ethylene diamine is more preferable in terms of cross-linking strength by hydrogen bonding and water solubility.

<Ester compounds>>

Examples of the ester compounds include: monofunctional esters such as ethyl acetate, butyl acetate, and ethyl propionate; multifunctional aliphatic esters such as dimethyl succinate and dimethyl adipate; and multifunctional aromatic esters such as dimethyl terephthalate. One of these ester compounds may be used alone or two or more of these ester compounds may be used in combination. Among these ester compounds, dimethyl adipate is preferable in terms of water solubility, evaporation and odor during object formation, and safety.

«Ketone compounds»

Examples of the ketone compounds include monofunctional ketones such as acetone and methyl ethyl ketone and multifunctional ketones such as acetyl acetone and 2,4,6-heptatrione. One of these ketone compounds may be used alone or two or more of these ketone compounds may be used in combination. Among these ketone compounds, acetyl acetone is preferable in terms of volatility and water solubility.

The content of the solvent (B) having a hydrogen bonding capacity is preferably 10% by mass or greater but 50% by mass or less relative to the total amount of the support portion material. When the content of the solvent (B) having a hydrogen bonding capacity is 10% by mass or greater but 50% by mass or less, compressive stress and water disintegrability sufficient as the support portion material for shape support can be satisfied simultaneously.

[Mass ratio (A/B)]

A mass ratio (A/B) of the content (% by mass) of (A) to the content (% by mass) of (B) is preferably 0.3 or greater but 2.5 or less and more preferably 0.5 or greater but 2.5 or less. When the mass ratio (A/B) is 0.3 or greater but 2.5 or less, compressive stress in response to compression by 1% can be improved.

<Polymerization initiator (C)>

As the polymerization initiator (C), an arbitrary substance that produces radicals when irradiated with light (particularly, ultraviolet rays having a wavelength of from 220 nm through 400 nm) can be used.

Examples of the polymerization initiator (C) include acetophenone, 2, 2-diethoxyacetophenone, p-dimethylaminoacetophenone, benzophenone, 2-chlorobenzophenone, p,p'-dichlorobenzophenone, p,p-bisdiethyl aminobenzophenone, Michler's ketone, benzyl, benzoin, benzoin methyl ether, benzoin ethyl ether, benzoin isopropyl ether, benzoin-n-propyl ether, benzoin isobutyl ether, benzoin-n-butyl ether, benzyl methyl ketal, thioxanthone, 2-chlorothioxanthone, 2-hydroxy-2-methyl-1-phenyl-1-one, 1-(4-isopropyl phenyl)-2-hydroxy-2-methyl propan-1-one, methyl benzoyl formate, 1-hydroxycyclohexyl phenyl ketone, azobis isobutyronitrile, benzoyl peroxide, and di-tert-butyl peroxide. One of these polymerization initiators may be used alone or two or more of these polymerization initiators may be used in combination. It is preferable to select a polymerization initiator suited to the wavelength of ultraviolet rays of an ultraviolet irradiator.

The content of the polymerization initiator (C) is preferably 0.5% by mass or greater but 10% by mass or less relative to the total amount of the support portion material.

-Ultraviolet irradiator-

Examples of the ultraviolet (UV) irradiator include a high-pressure mercury lamp, an ultrahigh-pressure mercury lamp, and metal halides.

The high-pressure mercury lamp is a point light source. However, a Deep UV type high-pressure mercury lamp combined with an optical system for a higher light utilization efficiency is capable of irradiation in a short-wavelength range.

The metal halides having a wide wavelength range are effective for colored materials, and are formed of halides of metals such as Pb, Sn, and Fe. Metal halides can be selected depending on the absorption spectrum of the polymerization initiator. The lamp used for curing is not particularly limited and may be appropriately selected depending on the intended purpose. For example, commercially available products such as H LAMP, D LAMP, and V LAMP available from Fusion System Japan Co., Ltd. may be used.

The surface tension of the support portion material is not particularly limited, may be appropriately selected depending on the intended purpose, and, for example, is preferably 20 mN/m or higher but 45 mN/m or lower and more preferably 25 mN/m or higher but 34 mN/m or lower. When the surface tension of the support portion material is 20 mN/m or higher, discharging instability (discharging direction bending and discharging failure) of the support portion material during object formation can be prevented. When the surface tension of the support portion material is 45 mN/m or lower, the liquid or the support portion material can be easily filled in, for example, a discharging nozzle for object formation.

The surface tension can be measured with, for example, a surface tensiometer (automatic contact angle meter DM-701, available from Kyowa Interface Science, Inc.).

- Viscosity-

The viscosity of the support portion material is 100 mPa·s or lower at 25 degrees C, preferably 3 mPa·s or higher but 70 mPa·s or lower at 25 degrees C and more preferably 6 mPa·s or higher but 50 mPa·s or lower.
When the viscosity of the support portion material is 100 mPa·s or lower, discharging stability can be improved.
The viscosity can be measured with, for example, a rotation viscometer (VISCOMATE VM-150III, available from Toki Sangyo Co., Ltd.) in an environment of 25 degrees C.

-Viscosity change rate-

It is preferable that a viscosity change rate of the support portion material between before and after the support portion material is left to stand at 50 degrees C for 2 weeks be within ±20% and more preferably within ±10%
When the viscosity change rate of the support portion material is within ±20%, the support portion material has an adequate storage stability and a good discharging stability.
The viscosity change rate between before and after being left to stand at 50 degrees C for 2 weeks can be measured in the manner described below.
The support portion material is put in a polypropylene-made wide-mouthed bottle (50 mL), and left to stand in a thermostat bath of 50 degrees C for 2 weeks. Subsequently, the support portion material is removed from the thermostat bath and left to stand until the support portion material becomes room temperature (25 degrees C). Then, the viscosity of the support portion material is measured. The viscosity change rate can be calculated according to the formula below, where viscosity before storage is the viscosity of the support portion material before put in the thermostat bath and viscosity after storage is the viscosity of the support portion material after removed from the thermostat bath. The viscosity before storage and the viscosity after storage can be measured with, for example, an R-type viscometer (available from Toki Sangyo Co., Ltd.) at 25 degrees C.

$$\text{Viscosity change rate (\%)} = [(\text{viscosity after storage})-(\text{viscosity before storage})]/(\text{viscosity before storage})\times 100$$

<Other components>

The other components are not particularly limited and may be appropriately selected depending on the intended purpose. Examples of the other components include a solvent, a polymerization inhibitor, a mineral dispersible in the support portion material, a polymerizable monomer other than the component (A), a thermal polymerization initiator, a colorant, an antioxidant, a chain-transfer agent, an age resistor, a cross-linking accelerator, an ultraviolet absorber, a plasticizer, an antiseptic, and a dispersant.

-Solvent-

Examples of the solvent include alcohols, ether compounds, triol, triethylene glycol, and polypropylene glycol. One of these solvents may be used alone or two or more of these solvents may be used in combination.
The SP value of the solvent is preferably 18 MPa$^{1/2}$ or higher and more preferably 23 MPa$^{1/2}$ or higher in terms of water disintegrability.
The content of the solvent is preferably 50% by mass or less and more preferably 30% by mass or less.

--Polymerization inhibitor--

Examples of the polymerization inhibitor include phenol compounds [e.g., hydroquinone, hydroquinone monomethyl ether, 2,6-di-t-butyl-p-cresol, 2,2-methylene-bis-(4-methyl-6-t-butyl phenol), and 1,1,3-tris-(2-methyl-4-hydroxy-5-t-butyl phenyl)butane], sulfur compounds [e.g., dilauryl dipropionate], phosphorus compounds [e.g., triphenyl phosphite], and amine compounds [e.g., phenothiazine]. One of these polymerization inhibitors may be used alone or two or more of these polymerization inhibitors may be used in combination.
Typically, the content of the polymerization inhibitor is preferably 30% by mass or less and preferably 20% by mass or less relative to the total amount of the support portion material in terms of compressive stress.

--Mineral dispersible in support portion material--

The mineral dispersible in the support portion material is not particularly limited and may be appropriately selected depending on the intended purpose. Examples of the mineral dispersible in the support portion material include layered clay minerals.

Examples of the layered clay minerals include smectites such as montmorillonite, beidellite, hectorite, saponite, nontronite, and Stevensite; vermiculite; bentonite; and layered sodium silicates such as kanemite, kenyanite, and macanite. One of these layered clay minerals may be used alone or two or more of these layered clay minerals may be used in combination.

The layered clay mineral may be a naturally produced mineral or a product produced by a chemical synthesizing method.

Organic treatment may be applied to the surface of the layered clay mineral.

When layered inorganic substances such as layered clay minerals are treated with an organic cationic compound, interlayer cations may be ion-exchanged with cationic group of, for example, a quaternary salt.

Examples of the cations of the layered clay minerals include metal cations such as sodium ion and calcium ion.

Layered clay minerals treated with an organic cationic compound are more swellable by and dispersible in the polymers presented above and the polymerizable monomers presented above.

Examples of the layered clay minerals treated with an organic cationic compound include LUCENTITE SERIES (available from Co-op Chemical Co., Ltd.). Examples of LUCENTITE SERIES (available from Co-op Chemical Co., Ltd.) include LUCENTITE SPN, LUCENTITE SAN, LUCENTITE SEN, and LUCENTITE STN. One of these layered clay minerals treated with an organic cationic compound may be used alone or two or more of these layered clay minerals treated with an organic cationic compound may be used in combination.

--Polymerizable monomer--

The polymerizable monomer is not particularly limited and may be appropriately selected depending on the intended purpose. Examples of the polymerizable monomer include (meth)acrylate.

Examples of the (meth)acrylate include 2-ethyl hexyl (meth)acrylate (EHA), isobornyl (meth)acrylate, 3-methoxybutyl (meth)acrylate, lauryl (meth)acrylate, 2-phenoxyethyl (meth)acrylate, isodecyl (meth)acrylate, isooctyl (meth)acrylate, tridecyl (meth)acrylate, caprolactone (meth)acrylate, and ethoxylated nonyl phenol (meth)acrylate. One of these (meth)acrylates may be used alone or two or more of these (meth)acrylates may be used in combination.

--Thermal polymerization initiator--

The thermal polymerization initiator is not particularly limited and may be appropriately selected depending on the intended purpose. Examples of the thermal polymerization initiator include azo-based initiators, peroxide initiators, persulfate initiators, and redox (oxidoreduction) initiators. However, a photopolymerization initiator is preferred to a thermal polymerization initiator in terms of storage stability.

Examples of the azo-based initiators include VA-044, VA-46B, V-50, VA-057, VA-061, VA-067, VA-086, 2,2'-azobis(4-methoxy-2,4-dimethylvaleronitrile) (VAZO 33), 2,2'-azobis(2-amidinopropane) dihydrochloride (VAZO 50), 2,2'-azobis(2,4-dimethylvaleronitrile) (VAZO 52), 2,2'-azobis (isobutyronitrile) (VAZO64), 2,2'-azobis-2-methylbutyronitrile (VAZO 67), and 1,1-azobis (1-cyclohexane carbonitrile) (VAZO 88) (all available from DuPont Chemical Company), 2,2'-azobis (2-cyclopropyl propionitrile), and 2,2'-azobis (methyl isobutyrate) (V-601) (available from Wako Pure Chemical Industries, Ltd.).

Examples of the peroxide initiators include benzoyl peroxide, acetyl peroxide, lauroyl peroxide, decanoyl peroxide, dicetyl peroxy dicarbonate, di(4-t-butylcyclohexyl)peroxy dicarbonate (PERKADOX 16S) (available from Akzo Nobel), di(2-ethyl hexyl)peroxy dicarbonate, t-butyl peroxy pivalate (LUPERSOL 11) (available from Elf Atochem), t-butyl peroxy-2-ethyl hexanoate (TRIGONOX 21-C50) (available from Akzo Nobel), and dicumyl peroxide.

Examples of the persulfate initiators include potassium persulfate, sodium persulfate, and ammonium persulfate.

Examples of the redox (oxidoreduction) initiators include a combination of a persulfate initiator with a reducing agent such as sodium metabisulfite and sodium bisulfite, a system based on an organic peroxide and tertiary amine (for example, a system based on benzoyl peroxide and dimethyl aniline), and a system based on an organic hydroperoxide and a transition metal (for example, a system based on cumene hydroperoxide and cobalt naphthenate).

--Colorant--

Examples of the colorant include a pigment and a dye.

Examples of the pigment include an organic pigment and an inorganic pigment.

Examples of the organic pigment include azo-pigments, polycyclic pigments, azine pigments, daylight fluorescent pigments, nitroso pigments, nitro pigments, and natural pigments.

Examples of the inorganic pigments include metal oxides (e.g., iron oxide, chromium oxide, and titanium oxide), and carbon black.

--Antioxidant--

Examples of the antioxidant include phenol compounds {[for example, monocyclic phenol (e.g., 2,6-di-t-butyl-p-cresol), bisphenol [e.g., 2,2'-methylene bis(4-methyl-6-t-butyl phenol)], and polycyclic phenol [e.g., 1,3,5-trimethyl-2,4,6-tris(3,5-di-t-butyl-4-hydroxybenzyl)benzene]}, sulfur compounds (e.g., dilauryl 3,3'-thiodipropionate), phosphorus compounds (e.g., triphenyl phosphite), and amine compounds (e.g., octylated diphenyl amine).

--Chain-transfer agent--

Examples of the chain-transfer agent include: hydrocarbons [compounds containing 6 or more but 24 or less carbon atoms, e.g., aromatic hydrocarbons (e.g., toluene and xylene), unsaturated aliphatic hydrocarbons (e.g., 1-butene and 1-nonene)]; halogenated hydrocarbons (compounds containing 1 or more but 24 or less carbon atoms, e.g., dichloromethane and carbon tetrachloride); alcohols (compounds containing 1 or more but 24 or less carbon atoms, e.g., methanol and 1-butanol); thiols (compounds containing 1 or more but 24 or less carbon atoms, e.g., ethyl thiol and 1-octyl thiol); ketones (compounds containing 3 or more but 24 or less carbon atoms, e.g., acetone and methyl ethyl ketone); aldehydes (compounds containing 2 or more but 18 or less carbon atoms, e.g., 2-methyl-2-propyl aldehyde and 1-pentyl aldehyde); phenols (compounds containing 6 or more but 36 or less carbon atoms, e.g., phenol, m-cresol, p-cresol, and o-cresol); quinones (compounds containing 6 or more but 24 or less carbon atoms, e.g., hydroquinone); amines (compounds containing 3 or more but 24 or less carbon atoms, e.g., diethyl methyl amine and diphenyl amine); and disulfides (compounds containing 2 or more but 24 or less carbon atoms, e.g., diethyl disulfide and di-1-octyl disulfide).

[Supporting force of cured product of support portion material]

The supporting force of a cured product (hereinafter, may also be referred to as "support portion material") of the support portion material according to the first embodiment is the ability of the support portion material to support the model material, and can be expressed by compressive stress in response to compression by 1%.

As the supporting force of the support portion material, the compressive stress in response to compression by 1% in an environment of 25 degrees C is preferably 0.5 kPa or higher and more preferably 2 kPa or higher in terms of the object forming accuracy of a photolithographic product and the solubility of the support portion material.

The supporting force of the support portion material can be adjusted to the range described above by selection of the kinds and contents of the components (A) and (B) constituting the support portion material. The compressive stress in response to compression by 1% can be measured with a universal tester (precision universal tester AG-I, available from Shimadzu Corporation).

As regards the supporting force of the support portion material according to the first embodiment, it is considered that a high supporting force is ensured by the component (B) forming a hydrogen bond with a polymer that is produced from polymerization of the component (A).

[Removability of support portion material]

As described above, the supporting force of the support portion material according to the first embodiment is attributed to hydrogen bonding. The supporting force of the support portion material is weakened by immersion in water, making it possible for the support portion material to disintegrate and be removed. When the component (B) has a low molecular weight, the support portion material quickly diffuses and can be removed in a short time.

--Dissolving liquid--

Examples of a dissolving liquid include a dissolving liquid having a hydrogen bonding capacity.

Examples of the dissolving liquid include water, alcohols such as butanol and hexanol, amines such as hexyl amine and pentyl amine, and aromatic compounds such as benzene and toluene. One of these dissolving liquids may be used alone or two or more of these dissolving liquids may be used in combination. Among these dissolving liquids, water and alcohols are preferable in terms of safety.

An additive may be added in the dissolving liquid.

Examples of the additive include a surfactant. By adjustment of the kind and amount of the surfactant, affinity with a straight-chain alkyl chain can be improved.

The temperature of the dissolving liquid is preferably 40 degrees C or higher in terms of softening the support portion material and facilitating permeation of the dissolving liquid into the support portion material, but a temperature lower than 40 degrees C may be selected in terms of preventing warpage of a three-dimensional object.

<Embodiment of producing apparatus>

Specific embodiments of a three-dimensional object producing method according to the first embodiment and a producing apparatus configured to carry out the producing method (may also be referred to as object forming apparatus herein) will be described below. However, the first embodiment should not be construed as being limited to these embodiments.

The model portion material and the support portion material described above are filled in the object forming apparatus of the present embodiment.

The object forming apparatus of the present embodiment is a typical material-jetting type object forming apparatus using a model portion material and a support portion material that have UV curability.

«Producing apparatus (object forming apparatus)»

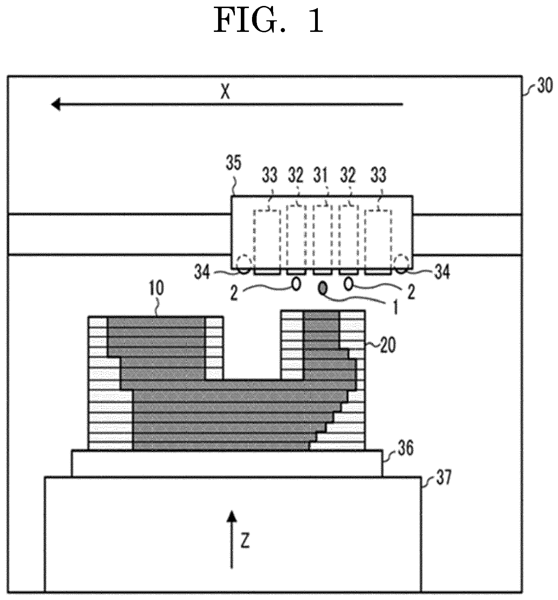

FIG. 1 is an exemplary diagram illustrating an example of the front view of the main part of the three-dimensional object producing apparatus. The object forming apparatus 30 includes head units 31 and 32, ultraviolet irradiators 33, rollers 34, a carriage 35, and a stage 37. The head unit 31 is configured to discharge a model portion material 1. The head units 32 are configured to discharge a support portion material 2. The ultraviolet irradiators 33 are configured to irradiate the model portion material 1 and the support portion material 2 that are discharged with ultraviolet rays to cure the model portion material 1 and the support portion material 2. The rollers 34 are configured to smooth liquid films of the model portion material 1 and the support portion material 2. The carriage 35 is configured to reciprocate each unit such as the head units 31 and 32 in the X direction of FIG. 1. The stage 37 is configured to move a substrate 36 in the Z direction illustrated in FIG. 1 and in the Y direction, which is the depth direction of FIG. 1. Moving in the Y direction may be performed by the carriage 35 instead of the stage 37.

When there are a plurality of model portion materials color by color, the object forming apparatus 30 may include a plurality of head units 31 configured to discharge the model portion materials of the respective colors.

As the nozzles of the head units 31 and 32, nozzles of a publicly known inkjet printer can be suitably used.

Examples of a metal usable for the rollers 34 include SUS 300 series, 400 series, 600 series, hexavalent chromium, silicon nitride, and tungsten carbide. A product obtained by coating any of these metals with fluorine or silicone may be used for the rollers 34. Among these metals, 600 series is preferable in terms of strength and machinability.

In the case of using the rollers 34, the object forming apparatus 30 laminates layers while moving the stage 37 downward in accordance with the number of times layers are laminated, in order to maintain the rollers 34 and the surface of the object being formed at a constant gap. It is preferable that the rollers 34 be provided adjacently to the ultraviolet irradiators 33.

In order to prevent ink drying during suspension, the object forming apparatus 30 may include a unit such as a cap configured to cover the nozzles of the head units 31 and 32. Further, in order to prevent nozzle clogging during a long continuous use, the object forming apparatus 30 may include a maintenance mechanism configured to perform maintenance of the heads.

«Method for generating three-dimensional object production data»

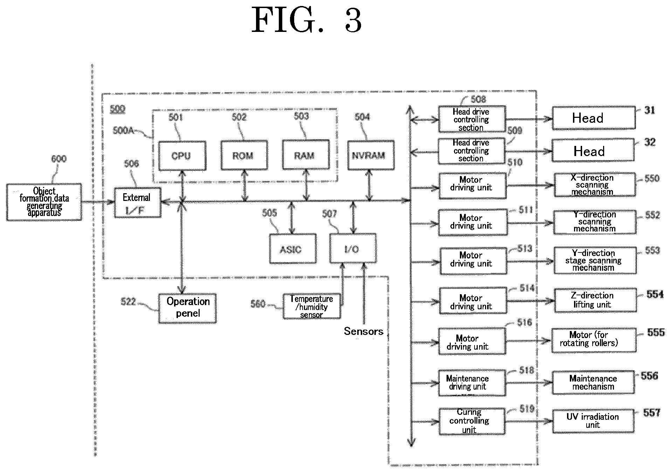

Production data (may also be referred to as object formation data herein) for producing a three-dimensional object is generated by an object formation data generating apparatus 600 as illustrated in, for example, FIG. 3.

The outline of the method for generating production data will be described below. More detailed description of production data (object formation data) generating apparatus and generating method for generating production data will be provided in the (Three-dimensional object production data generating method) section below.

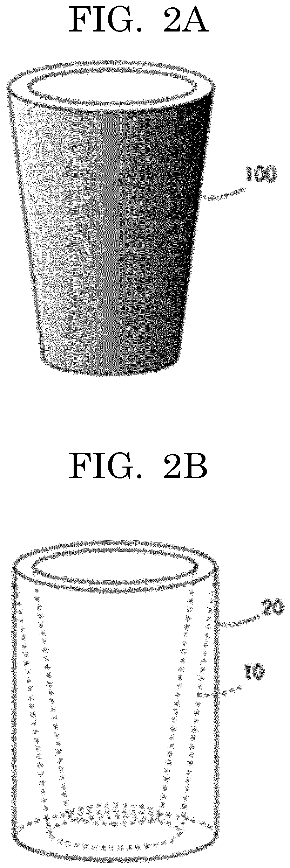

FIG. 2A is an exemplary diagram illustrating an example of a three-dimensional model, which is a representation of a three-dimensional object to be formed, in the form of a three-dimensional model. A three-dimensional model 100 is three-dimensional data such as surface data or solid data of a three-dimensional shape designed by three-dimensional CAD or a three-dimensional shape scanned with a three-dimensional scanner or a digitizer. The three-dimensional data may be converted into, for example, a STL (Standard Triangulated Language) format representing the surface of the three-dimensional model in the form of an assembly of triangles.

The object formation data generating apparatus identifies a bottom surface from the input three-dimensional data. The method for identifying a bottom surface is not particularly limited. Examples of the method include a method of setting the shortest dimension of the three-dimensional model as the Z axis of a three-dimensional coordinates system in which the three-dimensional model is to be disposed, and identifying the point of contact of the three-dimensional object with a plane orthogonal to the Z axis as the bottom surface.

The object formation data generating apparatus generates two-dimensional data representing cross-sections obtained by slicing the three-dimensional model in a direction parallel with the bottom surface. In this case, the object formation data generating apparatus calculates projected areas of the three-dimensional model on the X-Y plane, the X-Z plane, and the Y-Z plane. The object formation data generating apparatus slices a block shape that can accommodate the obtained projected areas in parallel with the X-Y plane at intervals determined by the thickness of one layer.

The thickness of one layer is different depending on the material used, but is typically 20 micrometers or greater but 60 micrometers or less.

The object formation data generating apparatus may automatically set data processing such as generation of the two-dimensional data in accordance with designation of the material to be used.

When a three-dimensional model has an overhang portion such as the curved surface expressed by gradation in FIG. 2A, the object formation data generating apparatus generates data in a manner that object formation is performed while the model portion corresponding to the overhang portion is supported by a support portion.

FIG. 2B is an exemplary diagram illustrating an example of an object to be formed of a model portion and a support portion, more specifically, is an exemplary diagram illustrating an example of an object, of which model portion 10 corresponding to an overhang portion is supported by a support portion 20.

The object formation data generating apparatus adds pixels representing the support portion to each generated two-dimensional data, at the bottom surface side of the overhang portion. The two-dimensional data to be generated finally represents one cross-section of the object and contains pixels representing a model portion and pixels representing a support portion.

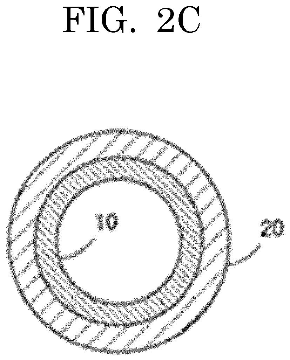

FIG. 2C is an exemplary diagram illustrating one cross-section of the object of FIG. 2B.

«Producing method (object forming method)»

The producing apparatus (object forming apparatus) forms a three-dimensional object based on the production data described above. Each step of production performed by the producing apparatus will be described below.

-Discharging step-

The engine of the object forming apparatus 30 causes the head unit 31 to discharge liquid droplets of the model portion material 1 and causes the head units 32 to discharge liquid droplets of the support portion material 2 based on the two-dimensional data representing the bottommost cross-section among the two-dimensional data input, while moving the carriage 35 or the stage 37.

As a result, the liquid droplets of the model portion material 1 are located at positions corresponding to the pixels representing the model portion of the two-dimensional data representing the bottommost cross-section, and the liquid droplets of the support portion material 2 are located at positions corresponding to the pixels representing the support portion, to form a liquid film in which liquid droplets at adjoining positions contact each other.

When there is one object to be formed, a liquid film having a cross-sectional shape is formed in the center of the stage 37. When there are a plurality of objects to be formed, the object forming apparatus 30 may form liquid films for a plurality of cross-sectional shapes over the stage 37 or may laminate a liquid film over an object formed earlier.

It is preferable to set a heater in the head units 31 and 32. Further, it is preferable to set a pre-heater on a path through which the model portion material is supplied to the head unit 31 and on a path through which the support portion material is supplied to the head units 32.

-Smoothing step-

In a smoothing step, the rollers 34 scrape away any excessive portion of the model portion material and the support portion material discharged over the stage 37, in order to smooth out the liquid film formed of the model portion material and the support portion material or bosses and recesses in the layer. The smoothing step may be performed once each time a layer is laminated in the Z axis direction or may be performed once each time layers are laminated by a number selected from a range of from 2 through 50.

In the smoothing step, the rollers 34 may be stopped or may be rotated at a positive or negative relative velocity with respect to the moving direction of the stage 37. The rotation velocity of the rollers 34 may be a constant velocity, a constant acceleration, or a constant deceleration. The rotational speed of the rollers 34 may be preferably 50 mm/s or higher but 400 mm/s or lower when expressed as the absolute value of the relative velocity with respect to the stage 37. When the relative velocity is excessively low, smoothing is insufficient and smoothness is spoiled. When the relative velocity is excessively high, the apparatus needs to be large in size, making, for example, positional deviation of discharged liquid droplets likely to occur due to, for example, vibration, to consequently reduce smoothness.

In the smoothing step, it is preferable that the rotation direction of the rollers 34 be opposite from the moving direction of the head units 31 and 32.

-Curing step-

A curing step is a step of curing an object forming layer formed in the model portion forming step and the support portion forming step.

In the curing step, the engine of the object forming apparatus 30 causes the ultraviolet irradiators 33 to irradiate the liquid film formed in the liquid film forming step with ultraviolet rays corresponding to the wavelength of the photopolymerization initiator contained in the model portion material and the support portion material, while moving the ultraviolet irradiators 33 by means of the carriage 35.

In this way, the object forming apparatus 30 cures the liquid film and forms a layer.

-Layer laminating step-

After the bottommost layer is formed, the engine of the object forming apparatus 30 moves the stage downward by a distance corresponding to one layer.

The engine of the object forming apparatus 30 causes liquid droplets of the model portion material 1 to be discharged and liquid droplets of the support portion material 2 to be discharged based on the two-dimensional image data representing the second cross-section counted from the bottom surface side, while moving the carriage 35 or the stage 37. The discharging method is the same as in the case of forming the liquid film of the bottommost layer. As a result, a liquid film having the cross-sectional shape represented by the second two-dimensional data counted from the bottom surface side is formed over the bottommost layer. Further, the engine of the object forming apparatus 30 causes the ultraviolet irradiators 33 to irradiate the liquid film with ultraviolet rays while moving the ultraviolet irradiators 33 by means of the carriage 35, to cure the liquid film and form the second layer counted from the bottom surface side over the bottommost layer.

The engine of the object forming apparatus 30 repeats formation and curing of a liquid film in the same manner as described above using the input two-dimensional data in order of closeness to the bottom surface side, to laminate layers. The number of times of repetition is different depending on the number of the input two-dimensional image data, or, for example, the height and shape of the three-dimensional model. When object formation using all two-dimensional image data is completed, an object of a model portion in the state of being supported by a support portion is obtained.

-Removing step-

The object formed by the object forming apparatus 30 includes the model portion and the support portion. The support portion is removed from the object after object formation. Examples of the removing method include physical removal and chemical removal. In the physical removal, a mechanical force is applied to remove the support portion. On the other hand, in the chemical removal, the support portion is immersed in a solvent in order to be disintegrated and removed. The method for removing the support portion is not particularly limited. However, the chemical removal is preferred, because the physical removal has a possibility of breaking the object. Furthermore, the removing method by water immersion is more preferred when costs are taken into consideration. In the case of employing the removing method by water immersion, a cured product of the support portion material to be selected has water disintegrability.

(Three-dimensional object production data generating method)

A three-dimensional object production data generating method according to the first embodiment sets a procedure for forming an object to be formed of a model portion and a support portion supporting the model portion and a procedure for forming a support portion protective wall having a predetermined height at a distance from the support portion positioned at the outermost contour of the object, based on a three-dimensional model representing the three-dimensional object to be formed.

Production data (object formation data) is generated by the object formation data generating apparatus 600 as illustrated in FIG. 3. The generated object formation data is input to the three-dimensional object forming apparatus 30. Subsequently, a controlling section 500 of the object forming apparatus 30 is driven in a manner that a three-dimensional object is formed according to the input object formation data. As a result, a desired three-dimensional object is formed by the object forming apparatus.

Unlike what is illustrated in FIG. 3, the object formation data needs not be generated by an apparatus (object formation data generating apparatus 600) different from the object forming apparatus 30. Instead, the object forming apparatus 30 may be intrinsically provided with an object formation data generating unit having the function of generating object formation data, in order that object formation data may be generated in the object forming apparatus 30.

Before generation of object formation data is specifically described, the operation of the controlling section 500 of the object forming apparatus 30 to which object formation data is input will be described first with reference to FIG. 3.

FIG. 3 is a block diagram illustrating an example of hardware and functions of the three-dimensional object producing apparatus.

The controlling section 500 includes a main controlling section 500A including a CPU 501 configured to control the entire apparatus, a ROM 502 configured to store three-dimensional object forming programs including a program causing the CPU 501 to perform control on a three-dimensional object forming operation including control relating to the first embodiment, and other fixed data, and a RAM 503 configured to temporarily store, for example, object formation data.

The controlling section 500 includes a nonvolatile memory (NVRAM) 504 configured to retain data even while the power supply to the apparatus is cut off. The controlling section 500 also includes an ASIC 505 configured to perform image processing for performing various signal processing on image data and process input/output signals for controlling the entire apparatus.

The controlling section 500 also includes an I/F 506 configured to send and receive data and signals and used for receiving object formation data from the external object formation data generating apparatus 600.

In FIG. 3, the object formation data generating apparatus 600 is an apparatus configured to generate object formation data (cross-sectional data), which is slice data representing a final object (three-dimensional object) sliced per object forming layer. The object formation data generating apparatus 600 is constructed with an information processing apparatus such as a personal computer. Details of the object formation data generating apparatus will be described below.

The controlling section 500 includes an I/O 507 configured to receive sensing signals from various sensors.

The controlling section 500 includes a head drive controlling section 508 configured to control driving of the liquid discharging head unit 31, and a head drive controlling section 509 configured to control driving of the head units 32.

The controlling section 500 also includes a motor driving unit 510 configured to drive a motor constituting an X-direction unit moving mechanism 550 configured to move the liquid discharging head units 31 and 32 in the X direction, and a motor driving unit 511 configured to drive a motor constituting a Y-direction scanning mechanism 552 configured to move the liquid discharging head units 31 and 32 in the Y direction (subscanning direction).

The controlling section 500 includes a motor driving unit 513 configured to drive a motor constituting a Y-direction stage scanning mechanism 553 configured to move the stage 37 in the Y direction together with a lifting unit 554, and a motor driving unit 514 configured to drive a motor constituting the lifting unit 554 configured to move the stage 37 upward and downward in the Z direction. In moving upward and downward in the Z direction, the liquid discharging head units 31 and 32 may be moved upward and downward, as described above.

The controlling section 500 includes a motor driving unit 516 configured to drive a motor 555 configured to drive rotation of the flattening rollers 34, and a maintenance driving unit 518 configured to drive the maintenance mechanism 556 for the liquid discharging head units.

The controlling section 500 includes a curing controlling unit 519 configured to control ultraviolet irradiation by an UV irradiation unit 557.

Sensing signals of, for example, a temperature/humidity sensor 560 configured to detect the temperature and humidity as the environmental conditions of the apparatus and sensing signals of other sensors are input to the I/O 507 of the controlling section 500.

An operation panel 522 for inputting and displaying needed information of the apparatus is coupled to the controlling section 500.

The controlling section 500 is configured to receive object formation data from the object formation data generating apparatus 600 as described.

Next, production data (object formation data) generating apparatus and production data (object formation data) generating method for generating production data will be described.

The object formation data generating apparatus 600 accepts three-dimensional model information representing a three-dimensional object to be formed in the form of a three-dimensional model. The object formation data generating apparatus 600 appropriately sets, for example, the shape and size of the support portion and the position (location) of the support portion with respect to the model portion based on the accepted information. Furthermore, the object formation data generating apparatus 600 appropriately sets, for example, the shape, the size (e.g., height and width), and the forming position (location) of the support portion protective wall based on information on the object formed of a model portion and a support portion.

In order for the object formation data generating apparatus 600 to set the various conditions described above, a worker or a user may previously input referential conditions. In this case, the object formation data generating apparatus 600 can automatically select object forming conditions based on comparison with the previously input conditions.

The object formation data generating apparatus 600 may include an adjusting unit enabling a worker or a user to correct the object forming conditions set by the object formation data generating apparatus as needed.

The object formation data generating apparatus 600 sets the procedures for forming the model portion, the support portion, and the support portion protective wall, such that object forming processes including an object forming process for the object to be formed of the model portion and the support portion and an object forming process for the support portion protective wall can both be performed.

These object forming procedures are converted into X-Y two-dimensional data representing one layer constituting an object forming layer, as described in the <<Three-dimensional object production data generating method>> section described above. Two-dimensional data to be generated finally in this way is the three-dimensional object production data.

The generated three-dimensional object production data is input to the controlling section 500 of the object forming apparatus.

Variations of the first embodiment will be specifically described below by way of a plurality of embodiments of a three-dimensional object. The present disclosure should not be construed as being limited to these embodiments.

<Embodiment 1-1 of three-dimensional object>

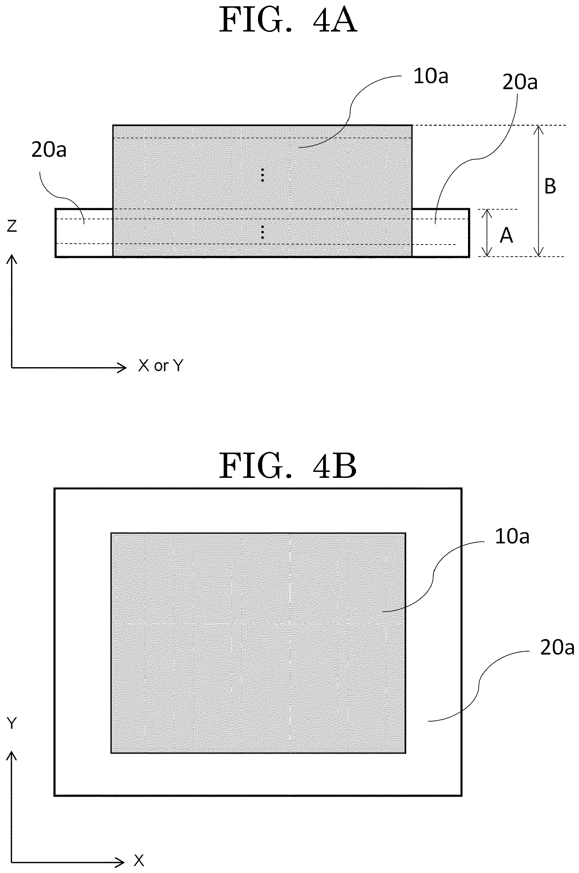

FIG. 4A is a side view illustrating an example of a three-dimensional object as Embodiment 1-1. FIG. 4B is a top view illustrating an example of the three-dimensional object as Embodiment 1-1.

As illustrated in FIG. 4A and FIG. 4B, a support portion 20a obtained by laminating support portion layers is formed over the stage at the circumference of a model portion 10a obtained by laminating model portion layers over the stage. As a result, the support portion 20a over the stage adheres to the circumference of the model portion 10a and can suppress warpage of the model portion 10a.

The height A of the support portion 20a at the circumference may be higher or lower than the height B of the model portion 10a. When the height A of the support portion 20a is higher than the height B of the model portion 10a, it is possible to make the edge of the end of the model portion 10a sharper. When the height A of the support portion 20a is lower than the height B of the model portion 10a, it is possible to suppress the amount of the support portion material to be used.

<Embodiment 1-2 of three-dimensional object>

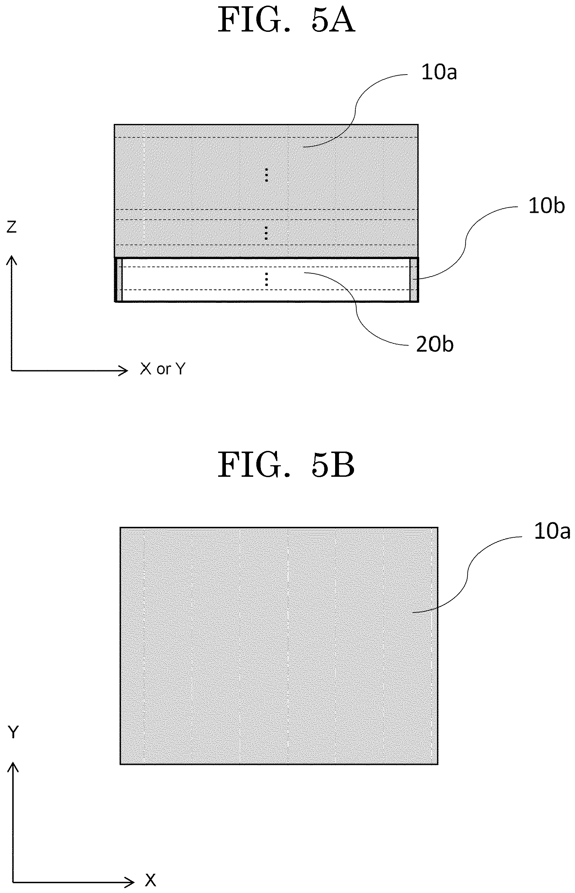

FIG. 5A is a side view illustrating an example of a three-dimensional object as Embodiment 1-2. FIG. 5B is a top view illustrating an example of the three-dimensional object as Embodiment 1-2.

As illustrated in FIG. 5A and FIG. 5B, a support portion 20b is formed over the stage and a model portion 10b is formed in a manner to adhere to the surface of the stage as an anchor portion penetrating the support portion 20b. Further, a model portion 10a is formed over the top of the support portion 20b in a manner that the top of the model portion 10b and the bottom of the model portion 10a at the circumference adhere to each other. As a result, the model portion 10b adheres to the circumference of the model portion 10a and to the stage, making it possible to suppress warpage of the model portion 10a. The model portion 10b having a thin shape is less likely to warp. Moreover, because the support portion 20b is formed at the bottom of the model portion 10a, it is easy to detach the three-dimensional object from the stage by removing the support portion 20b after formation of the three-dimensional object is completed.

<Embodiment 1-3 of three-dimensional object>

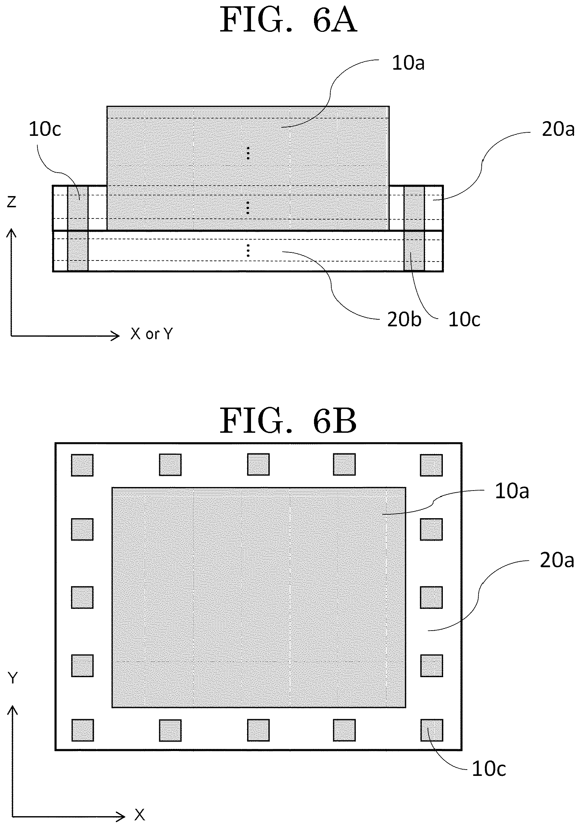

FIG. 6A is a side view illustrating an example of a three-dimensional object as Embodiment 1-3. FIG. 6B is a top view illustrating an example of the three-dimensional object as Embodiment 1-3.

As illustrated in FIG. 6A and FIG. 6B, a support portion 20b is formed over the stage, a model portion 10a is formed over the support portion 20b, and a support portion 20a is formed at the circumference of the model portion 10a. Further, during formation of the support portions 20a and 20b, a model portion 10c serving as an anchor portion is formed in a manner to adhere to the surface of the stage by penetrating the support portion 20a and the support portion 20b. In this way, the model portion 10c serving as the anchor portion makes it difficult for the support portion 20a and the support portion 20b to be detached from the stage, making it possible to better suppress warpage of the model portion 10a adhering to the support portion 20a. Moreover, because the support portion 20b is formed at the bottom of the model portion 10a, it is easy to detach the three-dimensional object from the stage by removing the support portion 20b after formation of the three-dimensional object is completed.

<Embodiment 1-4 of three-dimensional object>

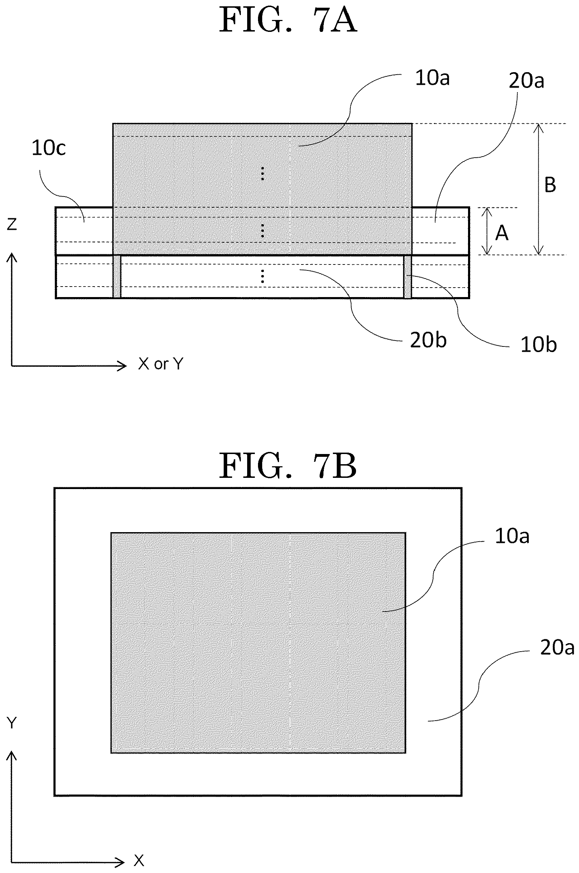

FIG. 7A is a side view illustrating an example of a three-dimensional object as Embodiment 1-4. FIG. 7B is a top view illustrating an example of the three-dimensional object as Embodiment 1-4.

As illustrated in FIG. 7A and FIG. 7B, a support portion 20b is formed over the stage, and a model portion 10b is formed in a manner to adhere to the surface of the stage as an anchor portion penetrating the support portion 20b. Further, a model portion 10a is formed over the top of the support portion 20b in a manner that the top of the model portion 10b and the bottom of the model portion 10a at the circumference adhere to each other. Furthermore, a support portion 20a is formed at the circumference of the model portion 10a and over the top of the support portion 20b. As a result, the circumference of the model portion 10a and the stage adhere to each other through the model portion 10b, and the support portion 20a adheres to the circumference of the model portion 10a, making it possible to better suppress warpage of the model portion 10a. That is, the warpage suppressing effects of Embodiments 1-1 and 1-2 can be obtained. Moreover, because the support portion 20b is formed at the bottom of the model portion 10a, it is easy to detach the three-dimensional object from the stage by removing the support portion 20b after formation of the three-dimensional object is completed.

<Embodiment 1-5 of three-dimensional object>

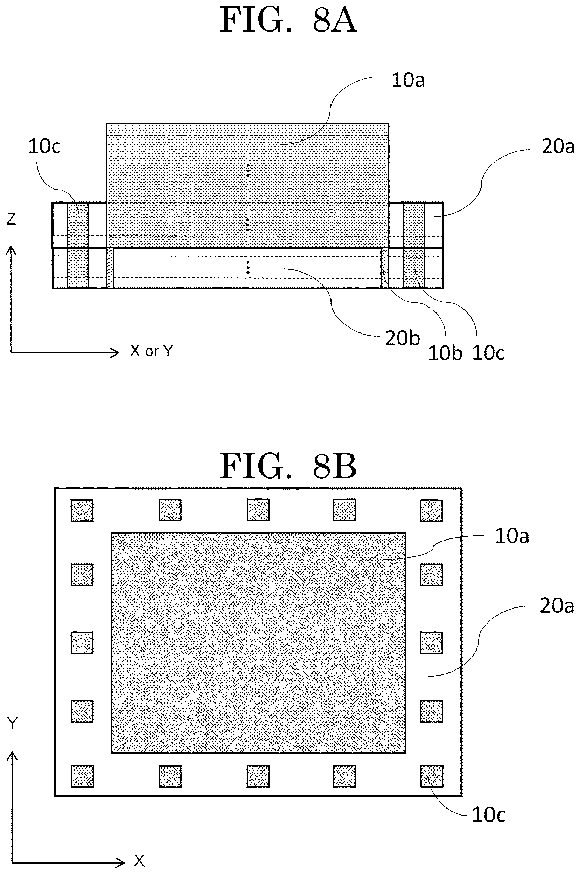

FIG. 8A is a side view illustrating an example of a three-dimensional object as Embodiment 1-5. FIG. 8B is a top view illustrating an example of the three-dimensional object as Embodiment 1-5.

As illustrated in FIG. 8A and FIG. 8B, a support portion 20b is formed over the stage, and a model portion 10b serving as an anchor portion penetrating the support portion 20b is formed in a manner to adhere to the surface of the stage. Further, a model portion 10a is formed over the top of the support portion 20b in a manner that the top of the model portion 10b and the bottom of the model portion 10a at the circumference adhere to each other. Furthermore, a support portion 20a is formed at the circumference of the model portion 10a and over the top of the support portion 20b. Moreover, a model portion 10c serving as an anchor portion is formed in a manner to adhere to the surface of the stage by penetrating the support portion 20a and the support portion 20b. In this way, an effect of suppressing warpage of the model portion 10a can be obtained.

<Embodiment 1-6 of three-dimensional object>

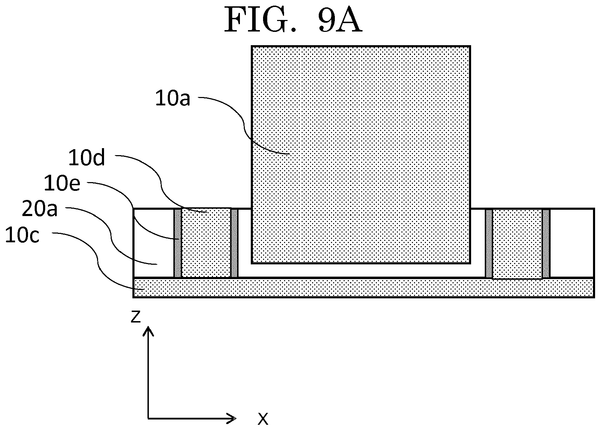

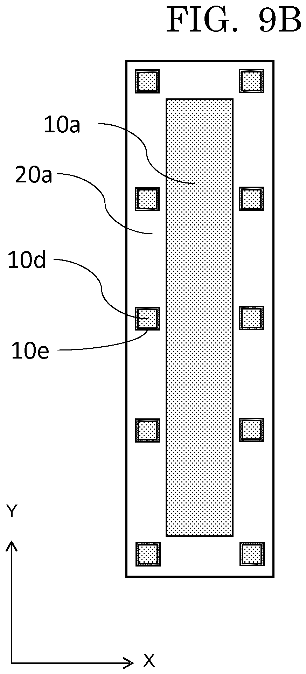

FIG. 9A is a side view illustrating an example of a three-dimensional object as Embodiment 1-6. FIG. 9B is a top view illustrating an example of the three-dimensional object as Embodiment 1-6.

As illustrated in FIG. 9A and FIG. 9B, model portion layers are laminated over the stage to form a foundation 10c. Further, while a support portion 20a is formed over the foundation 10c, a model portion 10d serving as an anchor portion penetrating the support portion 20a is formed in a manner to adhere to the surface of the foundation 10c. By the model portion 10d being formed while the support portion 20a is formed, a mixture portion 10e in which the model portion and the support portion are mixed with each other is formed at the interface between the support portion 20a and the model portion 10d. The support portion 20a and the model portion 10d are formed to be a smoothed state obtained by bringing a roller into contact with the support portion 20a and the model portion 10d. Then, a model portion 10a as a three-dimensional object is formed over the top of the support portion 20a. Here, the support portion 20a and the model portion 10a are formed by different scanning operations. This makes it less likely that the support portion 20a and the model portion 10a mix with each other, making it possible to suppress warpage of the model portion 10a and obtain a three-dimensional object with which no support portion is mixed. Moreover, formation of the mixture portion 10e can suppress detachment at the interface between the model portion 10d and the support portion 20a and can also suppress warpage of the support portion 20a, making it possible to suppress warpage of the model portion 10a, which is the three-dimensional object. Furthermore, because the support portion 20a is formed at the bottom of the model portion 10a, it is easy to detach the model portion 10a from the stage by removing the support portion 20a after formation of the three-dimensional object is completed.

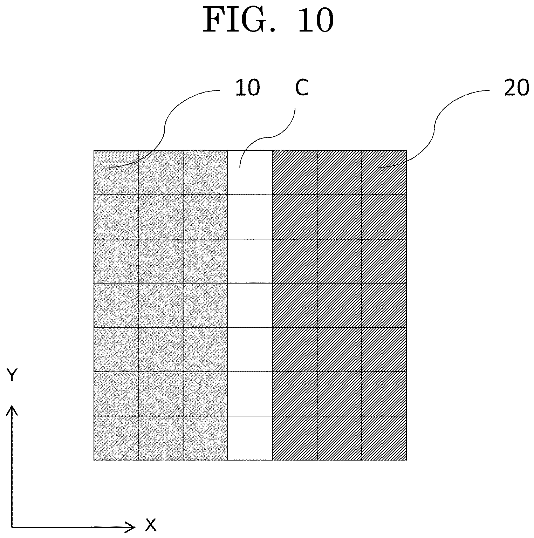

FIG. 10 is a diagram illustrating an example of settings for locations of the model portion and the support portion.

As illustrated in FIG. 10, in formation of the model portion and the support portion, a thinned-out region C may be present in the two-dimensional data of the model portion 10 and the support portion 20.

EXAMPLES

The first embodiment will be described more specifically by way of Examples. However, the present disclosure should not be construed as being limited to these Examples.

<Preparation of model portion material>

Isobornyl acrylate (available from Kyoei Chemical Co., Ltd.) (60 parts by mass), acryloylmorpholine (ACMO, available from KJ Chemicals Corporation) (10 parts by mass), and urethane acrylate (product name: UV-1700B, available from Nippon Synthetic Chemical Industry Co., Ltd., with a molecular weight of 2,000) (30 parts by mass) were mixed uniformly in a beaker. Subsequently, a photopolymerization initiator (product name: IRGACURE 819, available from BASF) (2 parts by mass) was added to the resultant, and further mixed uniformly. The resultant was passed through a filter (product name: CCP-FX-C1B, available from ADVANTEC Co., Ltd. with an average pore diameter of 3 micrometers), to obtain a model portion material.

<Preparation of support portion material>

Acryloylmorpholine (ACMO, available from KJ Chemicals Corporation) (40 parts by mass), polyoxypropylene glycol (45 parts by mass), 1,4-butanediol (15 parts by mass), a reaction initiator (product name: IRGACURE 819, available from BASF) (3 parts by mass), and a polymerization inhibitor (product name: PHENOTHIAZINE, available from Tokyo Chemical Industry Co., Ltd.) (0.1 parts by mass) were mixed uniformly and passed through a filter (product name: CCP-FX-C1B, available from ADVANTEC Co., Ltd., with an average pore diameter of 3 micrometers), to obtain a support portion material.

(Example 1)

In the three-dimensional object forming apparatus illustrated in FIG. 3, the obtained model portion material and support portion material were filled in three tanks leading to inkjet heads (product name: MH2420, available from Ricoh Industry Company, Ltd.).

<Test conditions>

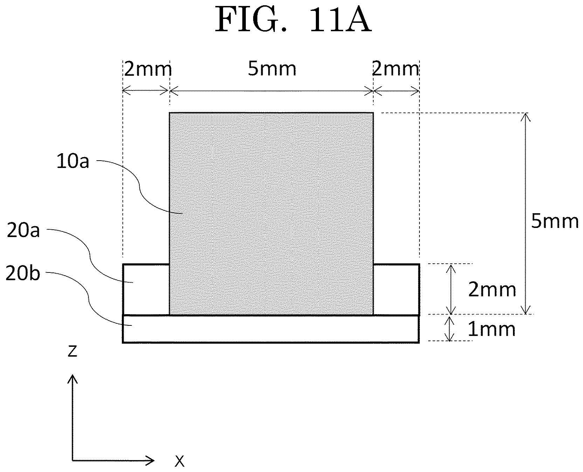

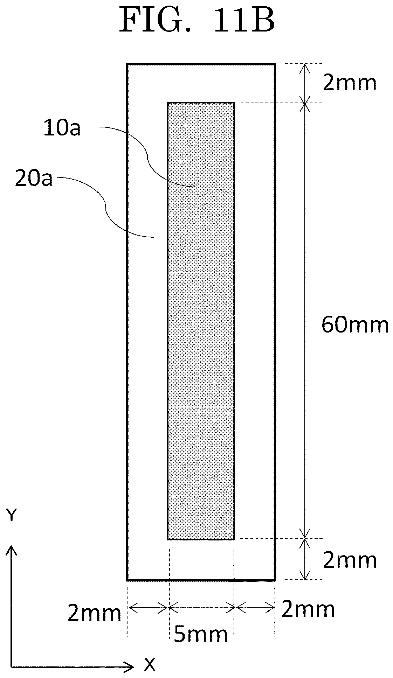

As test conditions, the resolution at which the model portion material and the support portion material are discharged was set to 1,200 dpi $\times$ 300 dpi, and the layer lamination pitch (film thickness per layer) was set to 19 micrometers.
As illustrated in FIG. 11A and FIG. 11B, twenty support portion layers were laminated over the stage, to form a support portion 20b. A model portion 10a (with a depth of 60 mm, a width of 5 mm, and a height of 5 mm) and a support portion 20a (with a height of 2 mm) surrounding the circumference of the model portion 10a by having a width of 2 mm were produced over the top of the support portion 20b.

<Evaluation of appearance of warpage of three-dimensional object being formed and after completed>

The producing apparatus was stopped when the layer lamination height became 2 mm from when object formation was started to visually observe the appearance of the three-dimensional object being formed. The appearance of the three-dimensional object completed was also visually observed. The appearances were evaluated according to the evaluation criteria described below. The result is presented in Table 1.

-Evaluation criteria-

A: No warpage of the model portion was observed.
B: Warpage of the model portion was observed.

<Evaluation of warpage of completed three-dimensional object using feeler gauge>

The degree of warpage of the three-dimensional object from which the support portion was removed after completion was measured in a manner that a feeler gauge (FEELER GAUGE TYPE A, available from Nagai Gauge) was inserted from the shorter side of the three-dimensional object, and evaluated according to the evaluation criteria described below. The result is presented in Table 1.

-Evaluation criteria-

A: The clearance was 0.1 mm or less.

B: The clearance was greater than 0.1mm.

The elastic modulus of the model portion was 2,000 MPa and the elastic modulus of the support portion was 50 MPa. The elastic modulus of the model portion and the elastic modulus of the support portion were measured with a universal tester (precision universal tester AG-I, available from Shimadzu Corporation) in a state that each of the model portion and the support portion was broken into a small piece having a size of 22 mm × 22 mm × 5 mm.

(Example 2)

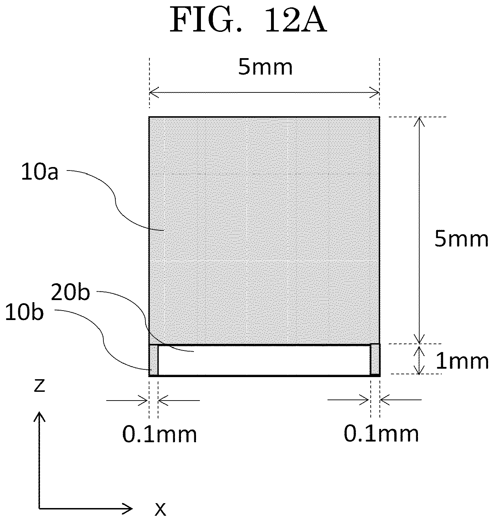

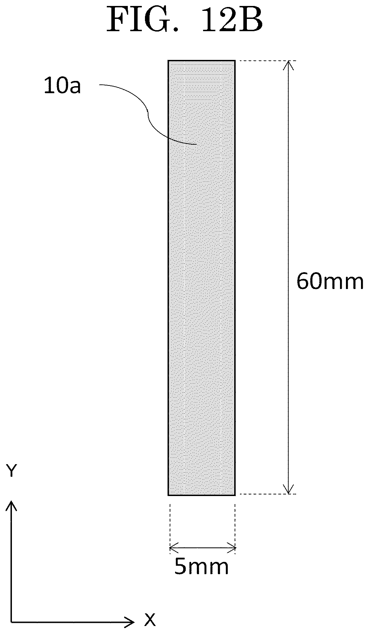

The above-described appearance evaluation was performed in the same manner as in Example 1, except that the three-dimensional object illustrated in FIG. 11A and FIG. 11B of Example 1 was changed to the three-dimensional object illustrated in FIG. 12A and FIG. 12B. The results are presented in Table 1.
The three-dimensional object illustrated in FIG. 12A and FIG. 12B was produced by laminating twenty support portion layers over the stage to form a support portion 20b, and laminating twenty model portion layers to form a model portion 10b (with a width of 0.1 mm and a depth of 1 mm) in a manner to adhere to the surface of the stage as an anchor portion penetrating the support portion 20b. A model portion 10a (with a size of 60 mm × 5 mm × 5 mm) was formed over the top of the support portion 20b and the model portion 10b in a manner that the top of the model portion 10b and the bottom of the model portion 10a at the circumference would adhere to each other.

(Example 3)

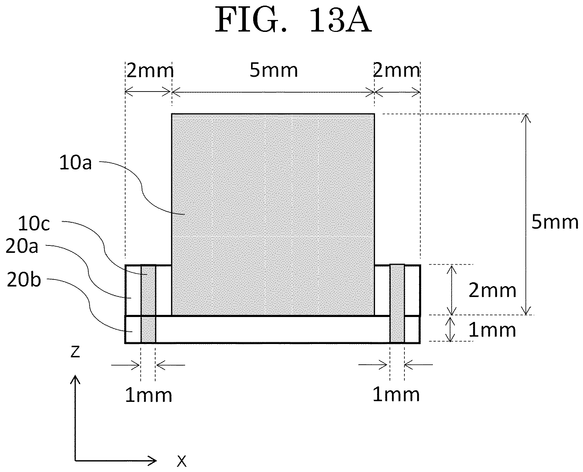

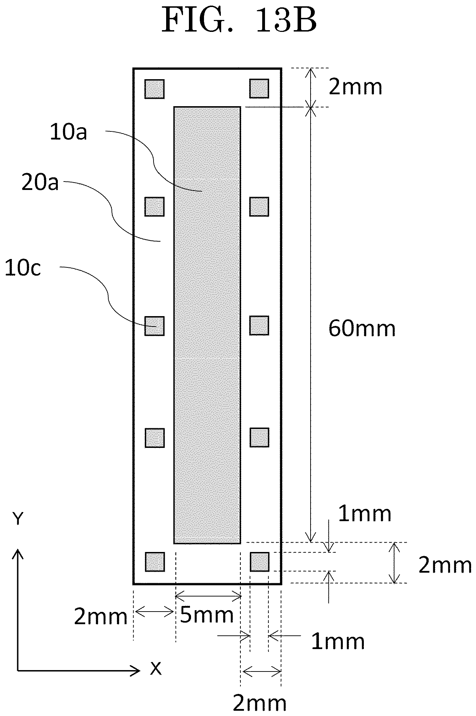

The above-described appearance evaluation was performed in the same manner as in Example 1, except that the three-dimensional object illustrated in FIG. 11A and FIG. 11B of Example 1 was changed to the three-dimensional object illustrated in FIG. 13A and FIG. 13B. The results are presented in Table 1.
The three-dimensional object illustrated in FIG. 13A and FIG. 13B was produced by laminating twenty layers of the support portion material over the stage to form a support portion 20b, forming a model portion 10a (with a depth of 60 mm, a width of 5 mm, and a height of 5 mm) over the support portion 20b, forming a support portion 20a in a manner to surround the circumference of the model portion 10a by having a width of 2 mm, and together with forming the support portion 20b and the support portion 20a, laminating twenty layers of the model portion material to form a model portion 10c (with a width of 1 mm and a depth of 1 mm) in a manner to adhere to the surface of the stage at ten positions, to serve as anchor portions penetrating the support portion 20b and the support portion 20a.

(Example 4)

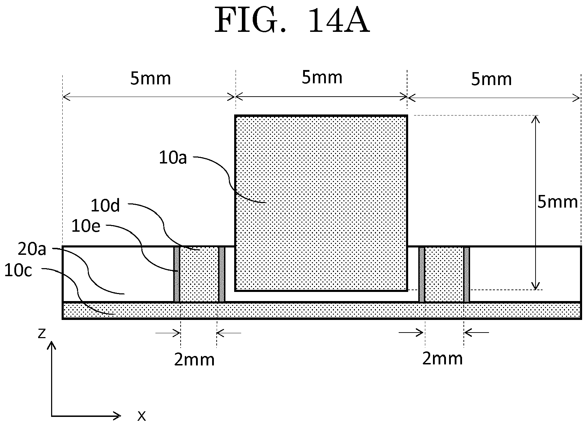

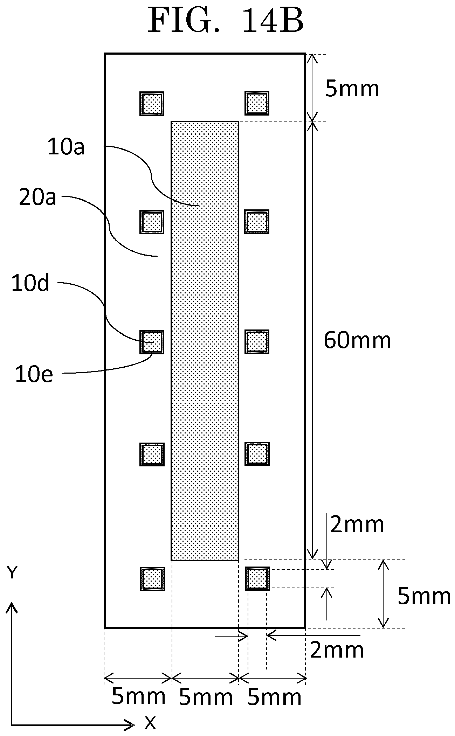

The above-described appearance evaluation was performed in the same manner as in Example 1, except that the three-dimensional object illustrated in FIG. 11A and FIG. 11B of Example 1 was changed to the three-dimensional object illustrated in FIG. 14A and FIG. 14B. The results are presented in Table 1.
The three-dimensional object illustrated in FIG. 14A and FIG. 14B was produced by laminating twenty layers of the model portion material over the stage to form a foundation 10c, then while forming a support portion 20a over the foundation 10c, laminating twenty model portion layers to form a model portion 10d (with a width of 2 mm and a depth of 2 mm) in a manner to adhere to the surface of the foundation 10c to serve as an anchor portion penetrating the support portion 20a. Formation of the model portion 10d while forming the support portion 20a resulted in formation of a mixture portion 10e at the interface between the support portion 20a and the model portion 10d. The support portion 20a and the model portion 10d were formed to be a smoothed state, by bringing a roller into contact with the support portion 20a and the model portion 10d. Further, a model portion 10a (with a depth of 60 mm, a width of 5 mm, and a height of 5 mm) was formed over the top of the support portion 20a as a three-dimensional object.

(Comparative Example 1)

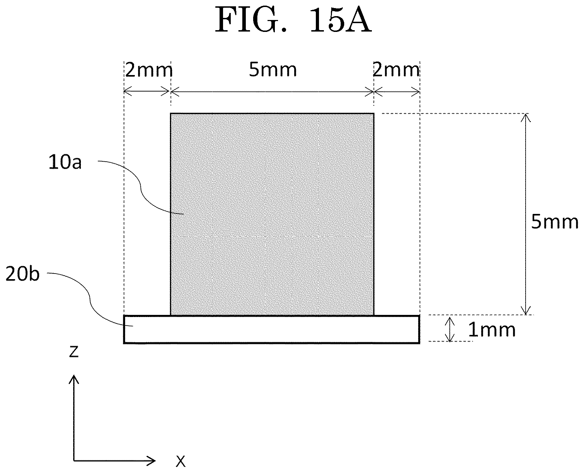

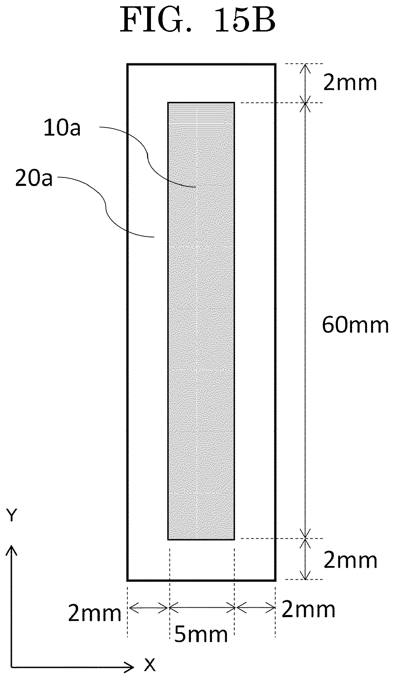

The above-described appearance evaluation was performed in the same manner as in Example 1, except that the three-dimensional object illustrated in FIG. 11A and FIG. 11B of Example 1 was changed to the three-dimensional object illustrated in FIG. 15A and FIG. 15B. The results are presented in Table 1.
The three-dimensional object illustrated in FIG. 15A and FIG. 15B was produced by laminating twenty support portion layers over the stage to form a support portion 20b, and forming a model portion 10a (with a depth of 60 mm, a width of 5 mm, and a height of 5 mm) over the top of the support portion 20b.

Table 1

|  | Three-dimensional object | Appearance evaluation (during formation and after completion) | Feeler gauge evaluation (after completion) |
|---|---|---|---|
| Ex. 1 | FIG. 11A and FIG. 11B | A | A (0.1 mm) |
| Ex. 2 | FIG. 12A and FIG. 12B | A | A (0 mm) |
| Ex. 3 | FIG. 13A and FIG. 13B | A | A (0 mm) |
| Ex. 4 | FIG. 14A and FIG. 14B | A | A (0 mm) |
| Comp. Ex. 1 | FIG. 15A and FIG. 15B | B | B (0.5 mm) |

As seen from the results of Table 1, it was confirmed in the appearance evaluation of the three-dimensional objects of Examples 1 to 4 that the three-dimensional objects had no warpage during formation and after completion. Further, from the feeler gauge evaluation of the three-dimensional objects of Examples 1 to 4, it was revealed that three-dimensional objects having little warpage after completion were produced.

As described above, the three-dimensional object producing method and the three-dimensional object producing apparatus according to the first embodiment form a model portion over the stage and form a support portion at least over the surface of the stage and at a part or all of the circumference of the model portion in a plan-view perspective. Hence, the three-dimensional object producing method and the three-dimensional object producing apparatus according to the first embodiment can provide a three-dimensional object producing method that can produce a three-dimensional object having little warpage.

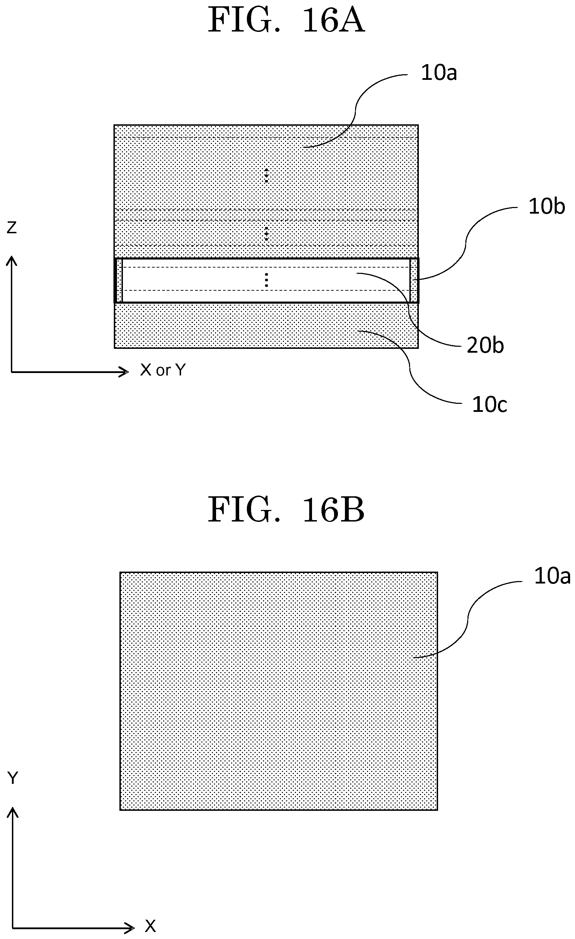

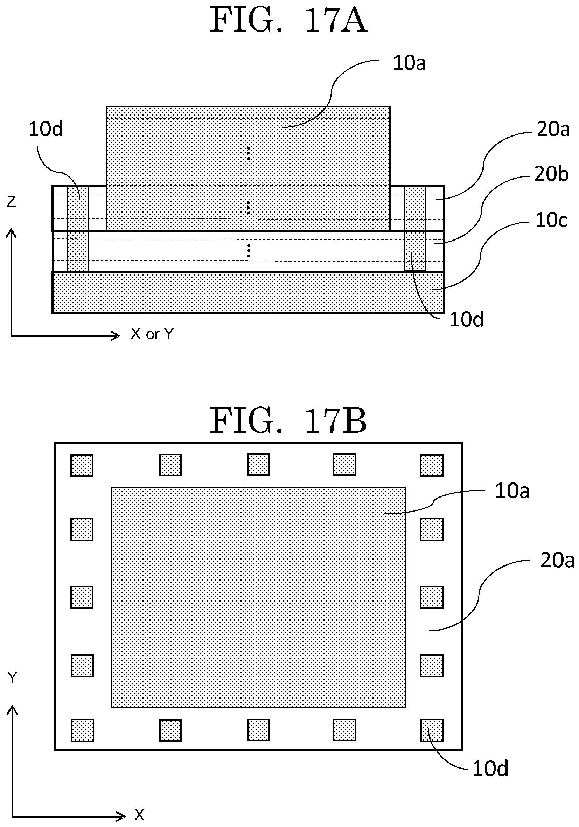

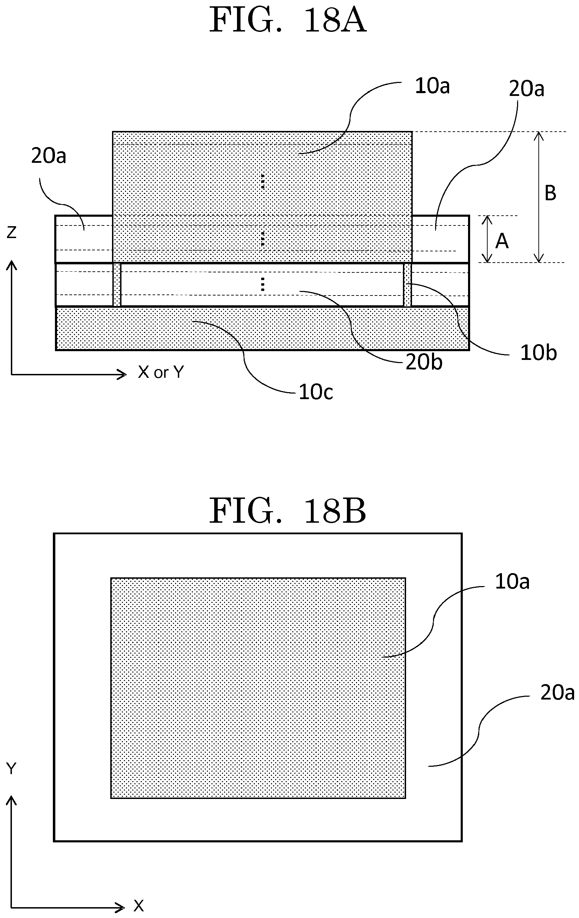

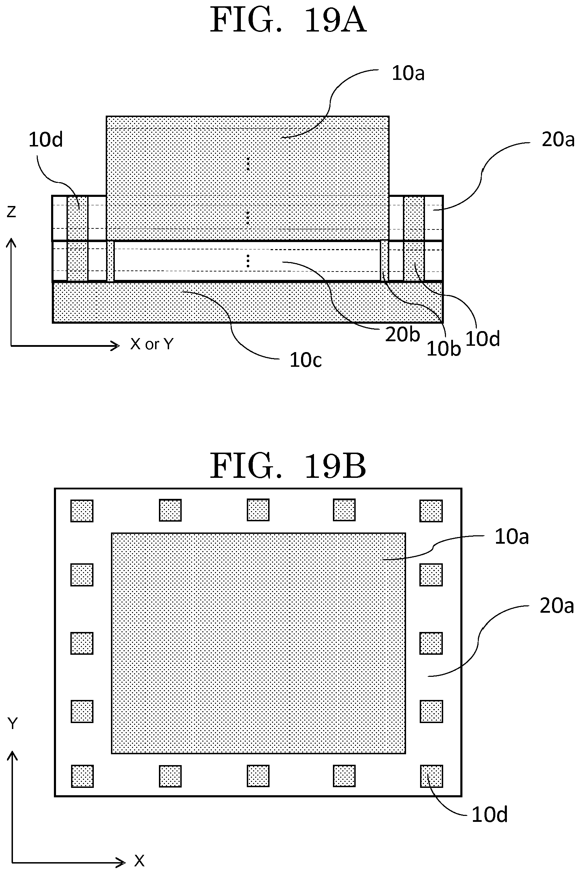

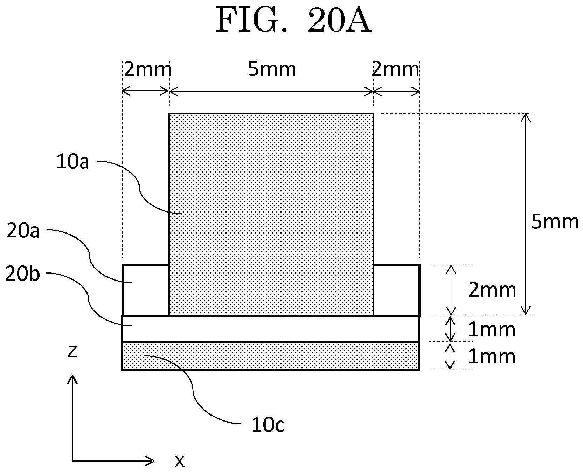

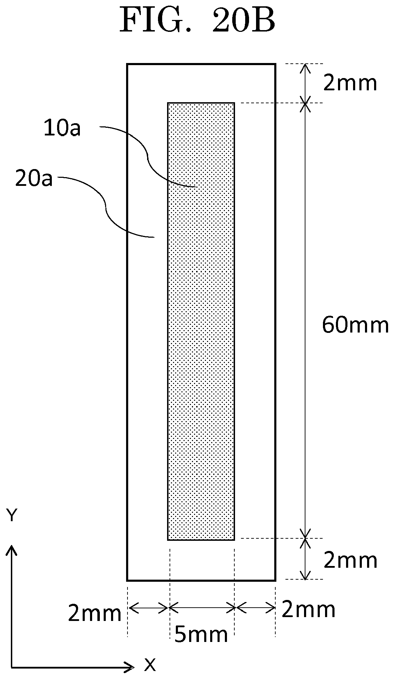

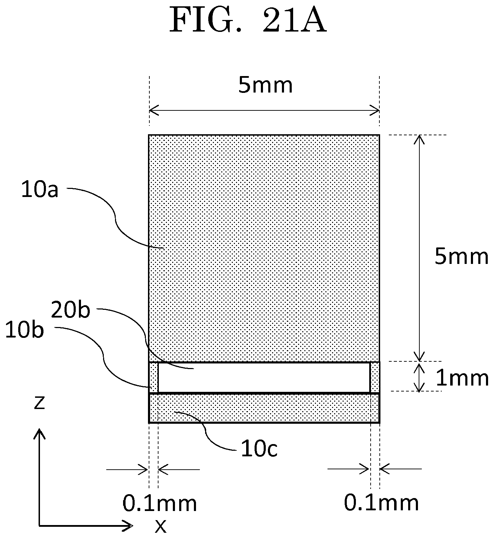

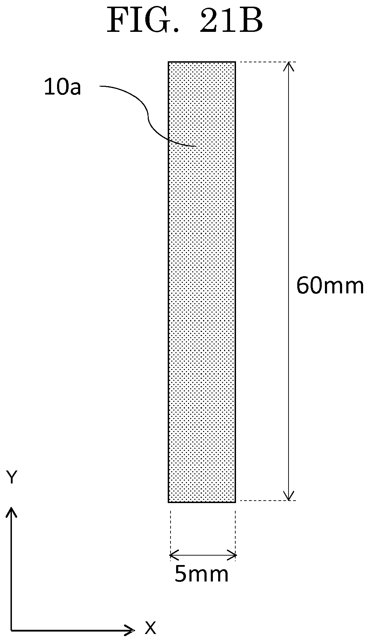

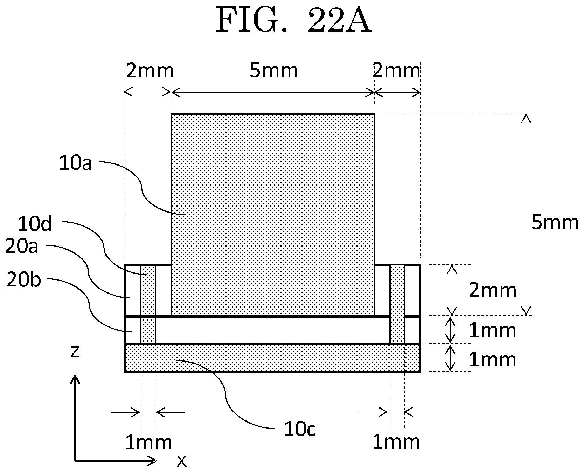

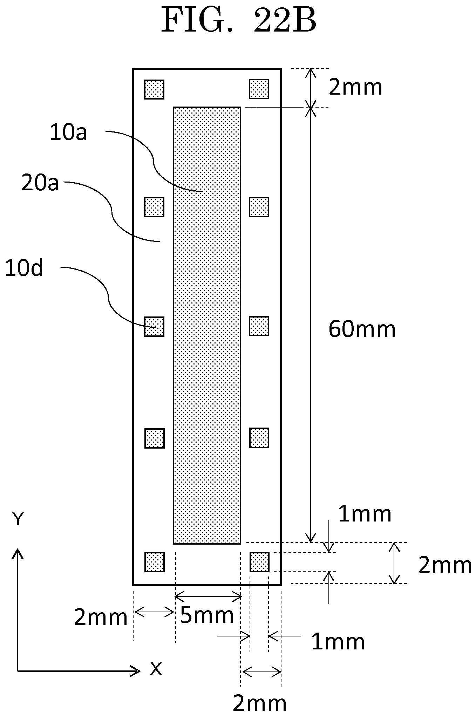

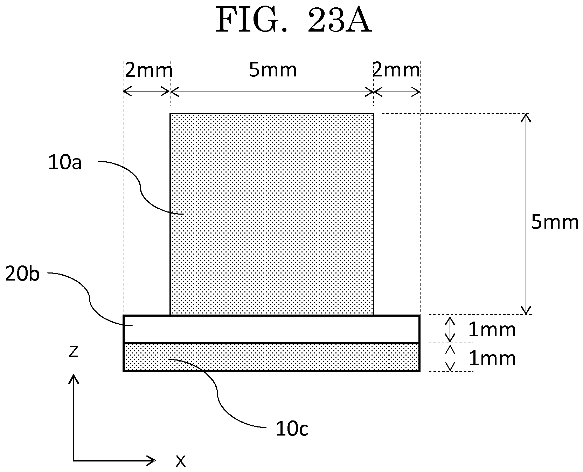

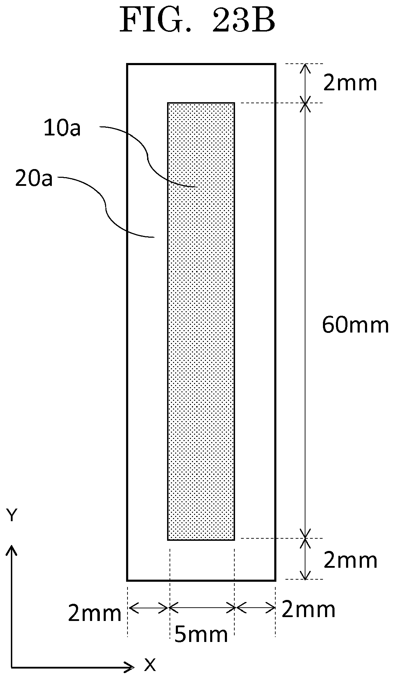

FIG. 16A to FIG. 23B illustrate Embodiments 1-7 to 1-14.

Embodiments 1-7 to 1-14 were produced by further forming a foundation formed of the model portion material at the bottom of the three-dimensional objects including the support portion according to Embodiments 1-2 to 1-6, Examples 1 to 4, and Comparative Example 1 described above. Hence, with the foundation, the support portion, and the three-dimensional object laminated in this order over the stage in each of Embodiments 1-7 to 1-14, the three-dimensional object can be protected when the three-dimensional object is detached from the stage, and the whole three-dimensional object can be easily detached from the stage.

(Second embodiment)

The second embodiment of the present disclosure will be described below. Any contents that are the same as in the first embodiment will be skipped appropriately.

The present inventors have obtained the following findings as a result of conducting earnest studies into a three-dimensional object by a material jet-type object forming method.

When the amount of a support material for supporting a protruding portion protruding from a model portion is suppressed to the requisite minimum and a support portion is formed to have a shape that does not protrude from the protruding portion of the model portion, the end of the model portion before cured flows due to the gravity. When the three-dimensional object formed is cured in this state and then the support portion is removed, the obtained model portion has cured being kept in the shape having the flowing end, to generate a burr in the gravitational direction (hereinafter referred to as "bottom burr"). Hence, there is a problem that it is difficult to form an intended three-dimensional object having sharp ends.

Further, when a support portion is formed in a manner to protrude more than a protruding portion of a model portion as illustrated in FIG. 12 of Japanese Unexamined Patent Application Publication No. 2012-096428, occurrence of a bottom burr can be prevented, but a burr in the protruding direction of the protruding portion of the model portion (hereinafter referred to as "side burr") occurs. Hence, there is a problem that it is difficult to form an intended three-dimensional object having sharp ends.

The present inventors have found that formation of a support portion in a manner to protrude more than a protruding portion of a model portion in the protruding direction of the protruding portion of the model portion and formation of such a portion of the support portion as protruding more than the protruding portion in the protruding direction of the protruding portion in a manner to have a bump over a surface at the side at which the support portion contacts the protruding portion with a bump height lower than the height of the protruding portion makes it possible to suppress occurrence of a bottom burr and a side burr on the model portion after curing and produce a three-dimensional object having sharp ends.

(Three-dimensional object producing method and three-dimensional object producing apparatus)

A three-dimensional object producing method according to the second embodiment includes a model portion forming step of forming a model portion having a protruding portion protruding in a protruding direction orthogonal to a layer lamination direction and a support portion forming step of forming a support portion contacting the protruding portion in the layer lamination direction and protruding more than the protruding portion. Such a portion of the support portion as protruding more than the protruding portion in the protruding direction of the protruding portion has a bump over a surface at a side at which the support portion contacts the protruding portion. The height of the bump is lower than the height of the protruding portion. The three-dimensional object producing method preferably includes a removing step and further includes other steps as needed.

A three-dimensional object producing apparatus according to the second embodiment includes a model portion forming unit configured to form a model portion having a protruding portion protruding in a protruding direction orthogonal to a layer lamination direction and a support portion forming unit configured to form a support portion contacting the protruding portion in the layer lamination direction and protruding more than the protruding portion. Such a portion of the support portion as protruding more than the protruding portion in the protruding direction of the protruding portion has a bump over a surface at a side at which the support portion contacts the protruding portion. The height of the bump is lower than the height of the protruding portion. The three-dimensional object producing apparatus preferably includes a removing unit and further includes other units as needed.

The three-dimensional object producing method according to the second embodiment can be suitably performed by the three-dimensional object producing apparatus according to the second embodiment.

In the three-dimensional object producing method, the model portion forming step, the support portion forming step, and a curing step described below are repeated a plurality of times.

The number of times of repetition is different depending on, for example, the size and shape of a three-dimensional object to be produced and is not to be determined flatly. The average thickness per layer is preferably 5 micrometers or greater but 50 micrometers or less. When the average thickness is 5 micrometers or greater but 50 micrometers or less, it is possible to perform object formation accurately and without detachment, and to laminate layers by the height of a three-dimensional object.

<Model portion forming step and model portion forming unit>

The model portion has a protruding portion protruding in a direction orthogonal to the layer lamination direction. The protruding portion has a shape that occupies space in the layer lamination direction. Hence, when the model portion is only formed during object formation, the gravity causes the protruding portion to flow in the gravitational direction before curing, making object formation difficult because the intended shape of the model portion cannot be maintained. Hence, in the three-dimensional object producing method according to the second embodiment, the protruding portion of the model portion is supported by a support portion in the layer lamination direction. This makes it possible to produce a three-dimensional object having a protruding portion.

<Support portion forming step and support portion forming unit>

The support portion contacts the protruding portion of the model portion in the layer lamination direction. The support portion makes it possible to produce a three-dimensional object having a protruding portion, by supporting the protruding portion of the model portion in the layer lamination direction.

The support portion is formed in a manner to protrude more than the protruding portion of the model portion in the protruding direction of the protruding portion of the model portion. Hence, the model portion can be prevented from flowing in the layer lamination direction before curing, making it possible to suppress occurrence of a bottom burr on the model portion after curing and produce a three-dimensional object having sharp ends.

In the second embodiment, for distinction from "the protruding portion of the model portion", "such a portion of the support portion as being formed in a manner to protrude more than the protruding portion of the model portion in the protruding direction of the protruding portion of the model portion" may be referred to as "protruding portion of the support portion".

The such portion of the support portion as being formed in a manner to protrude more than the protruding portion in the protruding direction of the protruding portion has a bump in the layer lamination direction, and the height of the bump is lower than the height of the protruding portion. By having the bump, the support portion can suppress occurrence of a side burr on the model portion.

The height of the bump is preferably 0.05 mm or greater in terms of suppressing occurrence of a side burr on the model portion, and is preferably 2.0 mm or less in terms of saving the amount of an ink to be used.

The ratio (height of the bump/height of the protruding portion) between the height of the bump and the height of the protruding portion is preferably 0.05 or greater but 0.20 or less in terms of suppressing occurrence of a side burr on the model portion.

The height of the bump can be measured with, for example, a height gauge (instrument name: HD-30AX, available from Mitutoyo Corporation) or a test indicator (instrument name: TI-123HRX, available from Mitutoyo Corporation).

The support portion is formed in a manner to protrude more than the protruding portion of the model portion in the protruding direction of the protruding portion of the model portion. Therefore, the area of a surface of the support portion at a side at which the protruding portion of the model portion and the support portion contact each other in the layer lamination direction is greater than the area of a surface of the protruding portion of the model portion at a side at which the protruding portion and the support portion contact each other in the layer lamination direction. Therefore, the model portion can be prevented from collapsing in the layer lamination direction before curing, making it possible to suppress occurrence of a bottom burr on the model portion after curing and removal of the support portion.

The distance from the protruding-direction end point of the surface of the support portion at the side at which the protruding portion and the support portion contact each other in the layer lamination direction to the point of contact of the support portion for the protruding portion and the support portion to contact each other in the layer lamination direction is preferably 0.2 mm or greater but 10 mm or less in terms of suppressing occurrence of a bottom burr on the model portion.

The ratio (distance/height of the protruding portion) between the distance and the height of the protruding portion of the support portion is preferably 0.05 or greater but 0.20 or less in terms of suppressing occurrence of a bottom burr on the model portion.

The distance and the height of the protruding portion of the support portion can be measured with, for example, a pair of digital calipers (instrument name: CD-15APX, available from Mitutoyo Corporation).

«Support portion material»

In the second embodiment, the support portion refers to a portion that is disposed at a supporting position with respect to the object forming direction of the model portion and contacts the model portion to support the model portion from below, in order to hold the three-dimensional object at a predetermined position until the model portion solidifies.

It is possible to obtain an object forming layer constituting the support portion, by applying the support portion material that is appropriately selected depending on the function of supporting the model portion.

It is preferable that the support portion material according to the second embodiment contains a hydrogen bonding polymer.

-Hydrogen bonding polymer-

It is preferable that the hydrogen bonding polymer be nonreactive with the monomer having a hydrogen bonding capacity, not inhibit polymerization reaction of the monomer having a hydrogen bonding capacity, have fluidity at normal temperature, and be water-soluble.

The hydrogen bonding polymer is not particularly limited and may be appropriately selected depending on the intended purpose. Examples of the hydrogen bonding polymer include active hydrogen compounds.

The active hydrogen compounds are not particularly limited and may be appropriately selected depending on the intended purpose. Examples of the active hydrogen compounds include monofunctional compounds and multifunctional compounds.

Examples of the monofunctional compounds include alcohols, ethers, amides, and esters.

Specific examples of the active hydrogen compounds include alkylene oxide adducts, monovalent or higher but tetravalent or lower alcohols, and amine compounds. Among these active hydrogen compounds, alkylene oxide adducts and monovalent or higher but divalent or lower alcohols are preferable.

Examples of the alkylene oxide adducts include polypropylene glycol, polyethylene glycol, and polypropylene glycol monobutyl ether.

The number average molecular weight of the hydrogen bonding polymer is preferably 400 or greater, more preferably 400 or greater but 5,000 or less, and particularly preferably 400 or greater but 2,000 or less in terms of satisfying both of a shape maintaining property of the cured support portion for maintaining the model portion and water solubility of the support portion,.

The number average molecular weight can be measured with, for example, gel permeation chromatography (GPC).

The content of the hydrogen bonding polymer is preferably 10% by mass or greater but 50% by mass or less and more preferably 25% by mass or greater but 50% by mass or less relative to the total amount of the support portion material in terms of water solubility.

(Three-dimensional object data generating method)

A three-dimensional object data generating method according to the second embodiment identifies a model portion having a protruding portion protruding in a protruding direction orthogonal to the layer lamination direction and a support portion present at a position to contact the protruding portion in the layer lamination direction and protruding more than the protruding portion based on a three-dimensional model representing the three-dimensional object to be formed, and sets an object forming procedure in a manner that such a portion of the support portion as protruding more than the protruding portion in the protruding direction of the protruding portion has a bump over a surface at a side at which the support portion contacts the protruding portion, and that the height of the bump is lower than the height of the protruding portion.

Production data (object formation data) is generated by the object formation data generating apparatus 600 as illustrated in FIG. 3, as in the first embodiment.

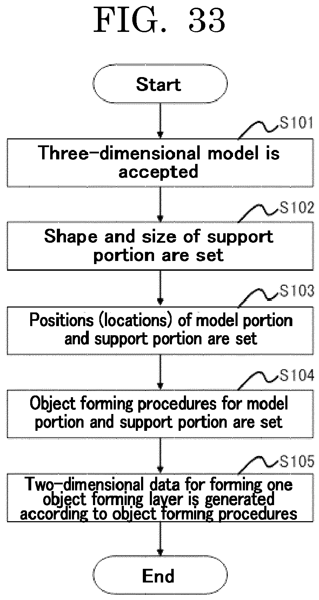

FIG. 33 is a flowchart illustrating an example of a flow of production data generating method of the object formation data generating apparatus 600.

In the step S101, a three-dimensional model of the three-dimensional object to be formed is accepted, and the flow is moved to the step S102.

In the step S102, based on the accepted three-dimensional model, the shape and size of the support portion are set. Specifically, a model portion having a protruding portion protruding in a protruding direction orthogonal to the layer lamination direction and a support portion protruding more than the protruding portion are identified from the three-dimensional model. Then, the flow is moved to the step S103.

In the step S103, the positions (locations) of the model portion and the support portion in the three-dimensional object are set. Specifically, the model portion and the support portion present at the position to contact the protruding portion in the layer lamination direction are identified from the three-dimensional model. Then, the flow is moved to the step S104.

In the step S104, the object forming procedures for the model portion and the support portion are set. Specifically, the object forming procedures are set in a manner that the protruding portion of the support portion will have a bump, and that the height of the bump will be lower than the height of the protruding portion. Then, the flow is moved to the step S105.

In the step S105, two-dimensional data for forming one object forming layer is generated according to the object forming procedures in the step S104. In this way, production data (object formation data) is generated, and this flow is terminated.

The three-dimensional object data generating method according to the second embodiment identifies a model portion having a protruding portion protruding in a protruding direction orthogonal to the layer lamination direction and a support portion present at a position to contact the protruding portion in the layer lamination direction and protruding more than the protruding portion based on a three-dimensional model representing the three-dimensional object to be formed, and sets an object forming procedure in a manner that such a portion of the support portion as protruding more than the protruding portion in the protruding direction of the protruding portion has a bump over a surface at a side at which the support portion contacts the protruding portion, and that the height of the bump is lower than the height of the protruding portion. By performing the setting, it is possible to produce a three-dimensional object having a shape in which the protruding portion of the support portion has a bump in the layer lamination direction.

The height of the bump may be previously set or may be defined by a user.

The distance from the protruding-direction end point of a surface of the support portion at the side at which the protruding portion and the support portion contact each other in the object forming direction to the point of contact of the support portion for the protruding portion and the support portion to contact each other in the object forming direction may be previously set or may be defined by a user.

<Hardware configuration of object formation data generating apparatus>

The hardware configuration of the object formation data generating apparatus configured to generate the object formation data described above will be described below.

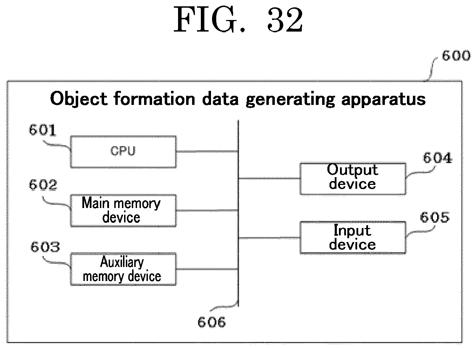

FIG. 32 is a block diagram illustrating an example of the hardware configuration of the object formation data generating apparatus.

As illustrated in FIG. 32, the object formation data generating apparatus 600 includes a CPU (Central Processing Unit) 601, a main memory device 602, an auxiliary memory device 603, an output device 604, and an input device 605. These units are coupled to one another via a bus 606.

The CPU 601 is a processing device configured to execute various controls and operations. The CPU 601 is configured to realize various functions by executing an OS (Operation System) and programs stored in, for example, the main memory device 602. That is, in the present embodiment, the CPU 601 functions as the controlling section of the object formation data generating apparatus 600 by executing a production data (object formation data) generating program.

The production data (object formation data) generating program and various databases need not indispensably be stored in, for example, the main memory device 602 and the auxiliary memory device 603. The production data (object formation data) generating program and various databases may be stored in, for example, another information processing device coupled to the object formation data generating apparatus 600 through, for example, the Internet, a LAN (Local Area Network), and a WAN (Wide Area Network). The object formation data generating apparatus 600 may be configured to obtain the production data (object formation data) generating program and various databases from such another information processing device and execute the program and databases.

The main memory device 602 is configured to store various programs, and store, for example, data needed for executing the various programs.

The main memory device 602 includes a ROM (Read Only Memory) and a RAM (Random Access Memory) that are unillustrated.

The ROM is configured to store, for example, various programs such as BIOS (Basic Input/Output System).

The RAM is configured to function as a work area to be developed when the various programs stored in the ROM are executed by the CPU 601. The RAM is not particularly limited and may be appropriately selected depending on the intended purpose. Examples of the RAM include a DRAM (Dynamic Random access Memory) and an SRAM (Static Random Access Memory).

The auxiliary memory device 603 is not particularly limited and may be appropriately selected depending on the intended purpose, so long as the auxiliary memory device 603 can store various kinds of information. Examples of the auxiliary memory device 603 include a solid state drive and a hard disk drive. Further, the auxiliary memory device 603 may be a portable memory device such as a CD (Compact Disc) drive, a DVD (Digital Versatile Disc) drive, and a BD (Blu-ray (registered trademark) Disc) drive.

As the output device 604, for example, a display can be used. The display is not particularly limited, and a publicly known display may be appropriately used. Examples of the display include a liquid crystal display and an organic EL display.

The input device 605 is not particularly limited so long as the input device 605 can accept various requests to the object formation data generating apparatus 600. A publicly known input device may be appropriately used. Examples of the input device 605 include a keyboard, a mouse, and a touch panel.

Based on the hardware configuration described above, the process functions of the object formation data generating apparatus 600 can be realized.

(Three-dimensional object)

A three-dimensional object is suitably produced according to the three-dimensional object producing method of the present disclosure and by the three-dimensional object producing apparatus of the present disclosure.

(Embodiment)

Specific modes of a three-dimensional object producing method according to the second embodiment and a producing apparatus configured to carry out the three-dimensional object producing method (may also be referred to as object forming apparatus herein) will be described below. The present disclosure should not be construed as being limited to these embodiments.

The model portion material and the support portion material described above are filled in the object forming apparatus of the present embodiment.

The object forming apparatus of the present embodiment is a typical material-jetting type object forming apparatus using a model portion material and a support portion material that have ultraviolet curability.

<Producing apparatus (object forming apparatus)>

The object formation data generating apparatus generates data in a manner that the protruding portion of the model portion will be formed while being supported by the support portion in the layer lamination direction.

The object formation data generating apparatus adds pixels representing the support portion to each generated two-dimensional data, at a surface of the protruding portion of the model portion at a side in the layer lamination direction. The two-dimensional data to be generated finally represents one cross-section of the object and contains pixels representing the model portion and pixels representing the support portion.

<Producing method (object forming method)>

The producing apparatus (object forming apparatus) forms a three-dimensional object based on the production data described above. Each step of production performed by the producing apparatus will be described below.

-Model portion forming step and support portion forming step-

As illustrated in FIG. 1, the engine of the object forming apparatus 30 causes the head unit 31 to discharge liquid droplets of the model portion material 1 and causes the head units 32 to discharge liquid droplets of the support portion material 2 based on the two-dimensional data representing the bottommost cross-section among the two-dimensional data input, while moving the carriage 35 or the stage 37.
As a result, the liquid droplets of the model portion material 1 are located at positions corresponding to the pixels representing the model portion of the two-dimensional data representing the bottommost cross-section, and the liquid droplets of the support portion material 2 are located at positions corresponding to the pixels representing the support portion, to form an object forming layer in which liquid droplets at adjoining positions contact each other.
When there is one object to be formed, an object forming layer having a cross-sectional shape is formed in the center of the stage 37. When there are a plurality of objects to be formed, the object forming apparatus 30 may form object forming layers for a plurality of cross-sectional shapes over the stage 37 or may laminate an object forming layer over an object formed earlier.
It is preferable to install a heater in the head units 31 and 32. Further, it is preferable to install a pre-heater on a path through which the model portion material is supplied to the head unit 31 and on a path through which the support portion material is supplied to the head units 32.

--Smoothing step--

In a smoothing step, the rollers 34, which are an example of the smoothing unit, scrape away any excessive portion of the model portion material and the support portion material discharged over the stage 37, in order to smooth out the object forming layer formed of the model portion material and the support portion material, or bosses and recesses in the object forming layer. The smoothing step may be performed once each time a layer is laminated in the Z axis direction or may be performed once each time layers are laminated by a number selected from a range of from 2 through 50.
In the smoothing step, the rollers 34 may be stopped or may be rotated at a positive or negative relative velocity with respect to the moving direction of the stage 37. The rotation velocity of the rollers 34 may be a constant velocity, a constant acceleration, or a constant deceleration. The rotational speed of the rollers 34 may be preferably 50 mm/s or higher but 400 mm/s or lower when expressed as the absolute value of the relative velocity with respect to the stage 37. When the relative velocity is excessively low, smoothing is insufficient and smoothness is spoiled. When the relative velocity is excessively high, the apparatus needs to be large in size, making, for example, positional deviation of discharged liquid droplets likely to occur due to, for example, vibration, to consequently reduce smoothness.
In the smoothing step, it is preferable that the rotation direction of the rollers 34 be opposite from the moving direction of the head units 31 and 32.

-Curing step-

In a curing step, the engine of the object forming apparatus 30 causes the ultraviolet irradiators 33 to irradiate the object forming layer formed in the model portion forming step and the support portion forming step with ultraviolet rays corresponding to the wavelength of the photopolymerization initiator contained in the model portion material and the support portion material, while moving the ultraviolet irradiators 33 by means of the carriage 35. In this way, the object forming apparatus 30 cures the object forming layer.
Subsequently, after the bottommost layer is formed, the engine of the object forming apparatus 30 moves the stage downward by a distance corresponding to one layer. The engine of the object forming apparatus 30 causes liquid droplets of the model portion material 1 to be discharged and liquid droplets of the support portion material 2 to be discharged based on the two-dimensional image data representing the second cross-section counted from the bottom surface side, while moving the carriage 35 or the stage 37. The discharging method is the same as in the case of forming the object forming layer of the bottommost layer. As a result, an object forming layer having the cross-sectional shape represented by the second two-dimensional data counted from the bottom surface side is formed over the bottommost layer. Further, the engine of the object forming apparatus 30 causes the ultraviolet irradiators 33 to irradiate the object forming layer with ultraviolet rays while moving the ultraviolet irradiators 33 by means of the carriage 35, to cure the object forming layer and form the second layer counted from the bottom surface side over the bottommost layer.

The engine of the object forming apparatus 30 repeats object formation and curing in the same manner as described above using the input two-dimensional data in order of closeness to the bottom surface side, to laminate object forming layers. The number of times of repetition is different depending on the number of the input two-dimensional image data, or, for example, the height and shape of the three-dimensional model. When object formation using all two-dimensional image data is completed, an object of the model portion in the state of being supported by the support portion is obtained.

-Removing step-

The object formed by the object forming apparatus 30 includes the model portion and the support portion. The support portion is removed from the object after object formation.

EXAMPLES

The present disclosure will be described more specifically by way of Examples and Comparative Examples. However, the present disclosure should not be construed as being limited to these Examples.

<Preparation of model portion material>

Isobornyl acrylate (available from Kyoei Chemical Co., Ltd.) (60 parts by mass), acryloylmorpholine (ACMO, available from KJ Chemicals Corporation) (10 parts by mass), and urethane acrylate (product name: UV-1700B, available from Nippon Synthetic Chemical Industry Co., Ltd., with a molecular weight of 2,000) (30 parts by mass) were mixed uniformly in a beaker. Subsequently, a photopolymerization initiator (product name: IRGACURE 819, available from BASF) (2 parts by mass) was added to the resultant, and further mixed uniformly. The resultant was passed through a filter (product name: CCP-FX-C1B, available from ADVANTEC Co., Ltd. with an average pore diameter of 3 micrometers), to obtain a model portion material.

<Preparation of support portion material>

Acryloylmorpholine (ACMO, available from KJ Chemicals Corporation) (40 parts by mass), polyoxypropylene glycol (60 parts by mass), a reaction initiator (product name: IRGACURE 819, available from BASF) (3 parts by mass), and a polymerization inhibitor (product name: PHENOTHIAZINE, available from Tokyo Chemical Industry Co., Ltd.) (0.1 parts by mass) were mixed uniformly and passed through a filter (product name: CCP-FX-C1B, available from ADVANTEC Co., Ltd., with an average pore diameter of 3 micrometers), to obtain a support portion material.

<Formation of three-dimensional object>

(Example 5)

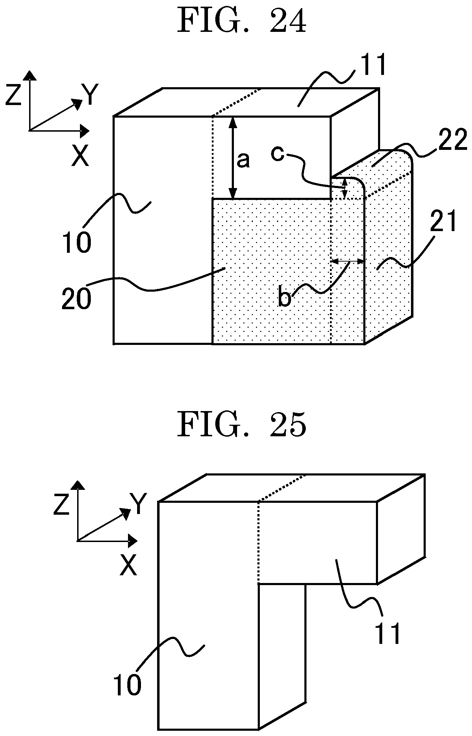

In the three-dimensional object producing apparatus illustrated in FIG. 1, the obtained model portion material and support portion material were filled in three tanks leading to inkjet heads (product name: MH2420, available from Ricoh Industry Company, Ltd.). Next, the shape of the three-dimensional object to be formed was set to an L-letter shape in which the portion denoted by the reference sign 10 in FIG. 24 had an X-direction length of 20 mm, a Y-direction length of 20 mm, and a Z-direction height of 50 mm, and the protruding portion of the model portion denoted by the reference sign 11 in FIG. 24 had an X-direction length of 20 mm and a Z-direction height (height a in FIG. 24) of 10 mm. The support portion was set to a shape having a bump 22. The protruding-direction length (length b in FIG. 24) of a protruding portion 21 of the support portion was set to 2 mm, and the height of the bump (height c in FIG. 24) was set to 1 mm. Subsequently, the model portion material and the support portion material were discharged in predetermined amounts from the respective inkjet heads.

Next, the model portion material and the support portion material were cured by irradiation of light at an intensity of 350 mJ/cm$^2$ using an ultraviolet irradiator (apparatus name: SPOT CURE SP5-250DB, available from Ushio Inc.). These series of processes were repeated.

Subsequently, the obtained object was put in water (1 L) having a temperature of 40 degrees C, to remove the support portion 20 by application of ultrasonic vibration for 1 hour, to keep the model portion 10 remaining. Subsequently, the model portion 10 was taken out from the water and dried at room temperature (25 degrees C) for 24 hours, to produce a three-dimensional object 1 illustrated in FIG. 25.

(Example 6)

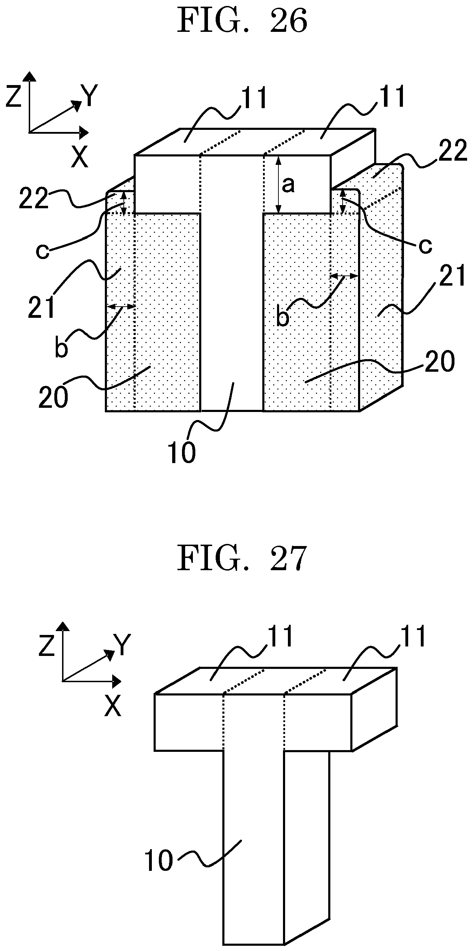

A three-dimensional object 2 was formed in the same manner as in Example 5, except that the shape of the three-dimensional object to be formed was set to a T-letter shape in which the portion denoted by the reference sign 10 in FIG. 26 had an X-direction length of 10 mm, a Y-direction length of 10 mm, and a Z-direction height of 50 mm, and the protruding portion of the model portion denoted by the reference sign 11 in FIG. 26 had an X-direction length of 20 mm and a Z-direction height (height a in FIG. 26) of 20 mm, the support portion was set to a shape having a bump 22, the protruding-direction length (length b in FIG. 26) of a protruding portion 21 of the support portion was set to 2 mm, and the height of the bump (height c in FIG. 26) was set to 0.5 mm (FIG. 26 and FIG. 27).

(Comparative Example 2)

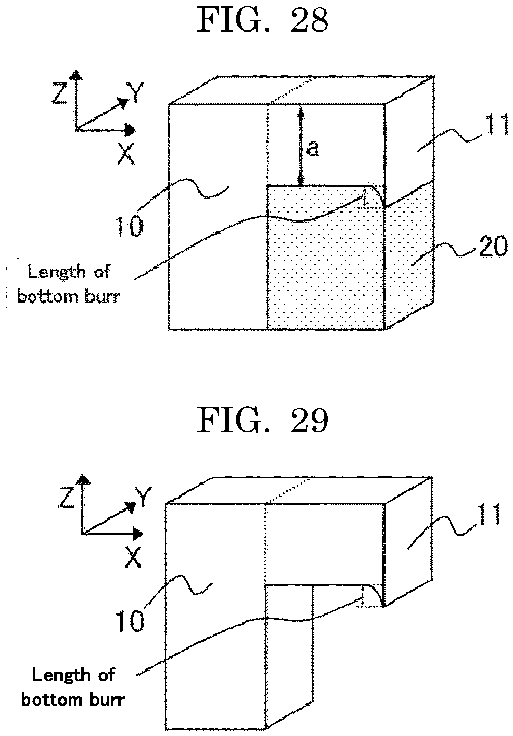

A three-dimensional object 3 of Comparative Example 2 was formed in the same manner as in Example 5, except that the shape of the three-dimensional object to be formed was set to an L-letter shape in which the portion denoted by the reference sign 10 in FIG. 28 had an X-direction length of 20 mm, a Y-direction length of 20 mm, and a Z-direction height of 50 mm, and the protruding portion of the model portion denoted by the reference sign 11 in FIG. 28 had an X-direction length of 20 mm and a Z-direction height (height a in FIG. 28) of 10 mm, and the support portion was set to a shape free of a protruding portion 21 (FIG. 29).

(Comparative Example 3)

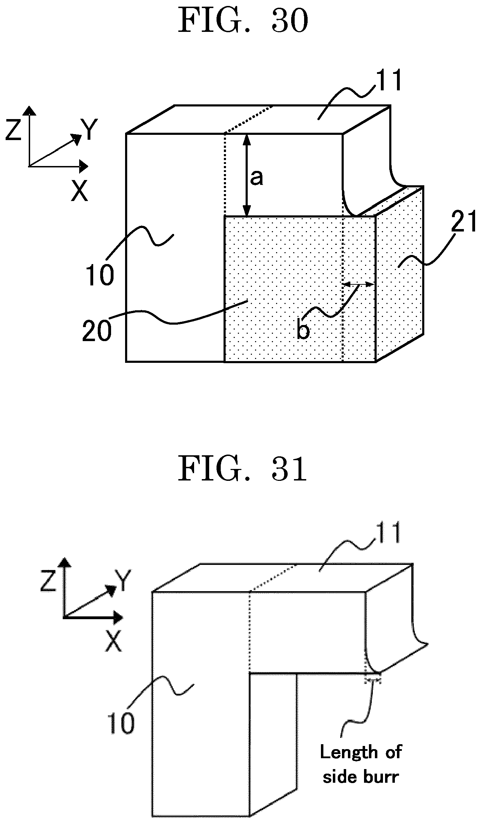

A three-dimensional object 4 was formed in the same manner as in Example 5, except that the shape of the three-dimensional object to be formed was set to an L-letter shape in which the portion denoted by the reference sign 10 in FIG. 30 had an X-direction length of 20 mm, a Y-direction length of 20 mm, and a Z-direction height of 50 mm, and the protruding portion of the model portion denoted by the reference sign 11 in FIG. 30 had an X-direction length of 20 mm and a Z-direction height (height a in FIG. 30) of 10 mm, the support portion was set to a shape having a protruding portion 21 but free of a bump 22, and the protruding-direction length (length b in FIG. 30) of the protruding portion 21 of the support portion was set to 2 mm (FIG. 31).

(Comparative Examples 4 and 5)

Three-dimensional objects 5 and 6 were formed in the same manner as in Comparative Example 3, except that unlike in Comparative Example 3, the protruding-direction length (length b) of a protruding portion 21 of the support portion was changed as presented in Table 1.
Next, the obtained three-dimensional objects 1 to 6 were evaluated in terms of "a degree of suppression of a bottom burr on the model portion" and "a degree of suppression of a side burr on the model portion" in the manner described below. The results are presented in Table 2 below.

<Evaluation of degree of suppression of bottom burr on model portion and degree of suppression of side burr on model portion>

With each of the three-dimensional objects 1 to 6 obtained by removing the support portion 20, the lengths of a bottom burr and a side burr on the ends of the model portion of the three-dimensional object were measured using a pair of digital calipers (instrument name: CD-15APX, available from Mitutoyo Corporation), to evaluate "the degree of suppression of a bottom burr on the model portion" and "the degree of suppression of a side burr on the model portion" according to the evaluation criteria described below. The grade "A" is the workable level.

-Evaluation criteria for degree of suppression of bottom burr on model portion-

A: The length of a bottom burr was less than 0.1 mm.
B: The length of a bottom burr was 0.1 mm or greater but less than 1.0 mm.
C: The length of a bottom burr was 1.0 mm or greater.

-Evaluation criteria for degree of suppression of side burr on model portion-

A: The length of a side burr was less than 0.1 mm.
B: The length of a side burr was 0.1 mm or greater but less than 1.0 mm.
C: The length of a side burr was 1.0 mm or greater.

Table 2

| | | Ex. | | Comp. Ex. | | | |
|---|---|---|---|---|---|---|---|
| | | 5 | 6 | 2 | 3 | 4 | 5 |
| Three-dimensional object | | 1 | 2 | 3 | 4 | 5 | 6 |
| Presence or absence of protruding portion of support portion | | Present | Present | Absent | Present | Present | Present |
| Presence or absence of bump over support portion | | Present | Present | Absent | Absent | Absent | Absent |
| Length a | | 10 mm | 20 mm | 10 mm | 10 mm | 10 mm | 10 mm |
| Length b | | 2 mm | 2 mm | - | 2 mm | 1 mm | 0.3 mm |
| Length c | | 1 mm | 0.5 mm | - | - | - | - |
| Evaluation result | Degree of suppression of bottom burr on model portion | A | A | C | A | A | B |
| | Degree of suppression of side burr on model portion | A | A | A | B | B | B |

Aspects of the present disclosure are, for example, as follows.

<1> A three-dimensional object producing method including:
forming a model portion formed of a model portion material over a stage; and forming a support portion formed of a support portion material at least over a surface of the stage and at a part or all of a circumference of the model portion in a plan-view perspective.
<2> The three-dimensional object producing method according to <1>, including forming an anchor portion formed of the model portion material at least over the surface of the stage in a manner that the anchor portion penetrates the support portion.
<3> The three-dimensional object producing method according to <1>, wherein the forming the support portion includes further forming the support portion between the model portion located over the stage and the surface of the stage, wherein the three-dimensional object producing method further includes forming an anchor portion formed of the model portion material at least over the surface of the stage in a manner that the anchor portion penetrates the support portion between the model portion and the surface of the stage.
<4> The three-dimensional object producing method according to <1>, further including
forming a foundation formed of the model portion material over the stage between the model portion and the surface of the stage,
wherein the forming the support portion includes further forming the support portion between the model portion and the foundation.
<5> The three-dimensional object producing method according to <4>, further including
in the forming the support portion, forming an anchor portion formed of the model portion material at least over a surface of the foundation in a manner that the anchor portion penetrates the support portion.
<6> The three-dimensional object producing method according to <1>, wherein the forming the model portion includes forming a model portion having a protruding portion protruding in a protruding direction orthogonal to a layer lamination direction,
wherein the forming the support portion includes forming a support portion contacting the protruding portion in the layer lamination direction and protruding more than the protruding portion,
wherein such a portion of the support portion as protruding more than the protruding portion in the protruding direction of the protruding portion has a bump over a surface at a side at which the support portion contacts the protruding portion, and wherein a height of the bump is lower than a height of the protruding portion.

<7> The three-dimensional object producing method according to <6>, wherein an area of a surface of the support portion at a side at which the protruding portion and the support portion contact each other in the layer lamination direction is greater than an area of a surface of the protruding portion at a side at which the protruding portion and the support portion contact each other in the layer lamination direction.

<8> The three-dimensional object producing method according to <6> or <7>, wherein the height of the bump is 2 mm or less, or a ratio (the height of the bump/the height of the protruding portion) between the height of the bump and the height of the protruding portion is 0.05 or greater but 0.20 or less.

<9> The three-dimensional object producing method according to any one of <1> to <8>, further including removing the support portion formed.

<10> The three-dimensional object producing method according to any one of <1> to <9>, wherein the support portion dissolves in a liquid.

<11> The three-dimensional object producing method according to any one of <1> to <10>, wherein an elastic modulus ratio between the model portion material and the support portion material is 20:1 or higher but 60:1 or lower.

<12> A three-dimensional object producing apparatus including:

> a model portion forming unit configured to form a model portion formed of a model portion material over a stage; and
> a support portion forming unit configured to form a support portion formed of a support portion material at least over a surface of the stage and at a part or all of a circumference of the model portion in a plan-view perspective.

<13> The three-dimensional object producing apparatus according to <12>, wherein the support portion forming unit is configured to form a support portion formed of the support portion material between the model portion located over the stage and the surface of the stage, wherein the three-dimensional object producing apparatus further includes an anchor portion forming unit configured to form an anchor portion formed of the model portion material at least over the surface of the stage in a manner that the anchor portion penetrates the support portion.

<14> A three-dimensional object including:
a model portion formed of a model portion material and formed over a stage; and a support portion formed of a support portion material and formed at least over a surface of the stage and at a part or all of a circumference of the model portion in a plan-view perspective.

<15> A three-dimensional object production data generating method including: identifying a model portion having a protruding portion protruding in a protruding direction orthogonal to a layer lamination direction and a support portion present at a position to contact the protruding portion in the layer lamination direction and protruding more than the protruding portion based on a three-dimensional model representing a three-dimensional object to be formed; and

setting an object forming procedure in a manner that such a portion of the support portion as protruding more than the protruding portion in the protruding direction of the protruding portion has a bump over a surface at a side at which the support portion contacts the protruding portion, and in a manner that a height of the bump is lower than a height of the protruding portion.

The three-dimensional object producing method according to any one of <1> to <11>, the three-dimensional object producing apparatus according to <12> or <13>, the three-dimensional object according to <14>, and the three-dimensional object production data generating method according to <15> can solve the various problems in the related art and can achieve the object of the present disclosure.

**Claims**

1.  A three-dimensional object producing method comprising:

> forming a model portion formed of a model portion material over a stage; and
> forming a support portion formed of a support portion material at least over a surface of the stage and at a part or all of a circumference of the model portion in a plan-view perspective.

**2.** The three-dimensional object producing method according to claim 1, comprising forming an anchor portion formed of the model portion material at least over the surface of the stage in a manner that the anchor portion penetrates the support portion.

**3.** The three-dimensional object producing method according to claim 1,
wherein the forming the support portion comprises further forming the support portion between the model portion located over the stage and the surface of the stage,
wherein the three-dimensional object producing method further comprises forming an anchor portion formed of the model portion material at least over the surface of the stage in a manner that the anchor portion penetrates the support portion between the model portion and the surface of the stage.

**4.** The three-dimensional object producing method according to claim 1, further comprising
forming a foundation formed of the model portion material over the stage between the model portion and the surface of the stage,
wherein the forming the support portion comprises further forming the support portion between the model portion and the foundation.

**5.** The three-dimensional object producing method according to claim 4, further comprising
in the forming the support portion, forming an anchor portion formed of the model portion material at least over a surface of the foundation in a manner that the anchor portion penetrates the support portion.

**6.** The three-dimensional object producing method according to claim 1,
wherein the forming the model portion comprises forming a model portion having a protruding portion protruding in a protruding direction orthogonal to a layer lamination direction,
wherein the forming the support portion comprises forming a support portion contacting the protruding portion in the layer lamination direction and protruding more than the protruding portion,
wherein such a portion of the support portion as protruding more than the protruding portion in the protruding direction of the protruding portion has a bump over a surface at a side at which the support portion contacts the protruding portion, and
wherein a height of the bump is lower than a height of the protruding portion.

**7.** The three-dimensional object producing method according to claim 6,
wherein an area of a surface of the support portion at a side at which the protruding portion and the support portion contact each other in the layer lamination direction is greater than an area of a surface of the protruding portion at a side at which the protruding portion and the support portion contact each other in the layer lamination direction.

**8.** The three-dimensional object producing method according to claim 6 or 7, wherein the height of the bump is 2 mm or less, or a ratio (the height of the bump/the height of the protruding portion) between the height of the bump and the height of the protruding portion is 0.05 or greater but 0.20 or less.

**9.** The three-dimensional object producing method according to any one of claims 1 to 8, further comprising
removing the support portion formed.

**10.** The three-dimensional object producing method according to any one of claims 1 to 9,
wherein the support portion dissolves in a liquid.

**11.** The three-dimensional object producing method according to any one of claims 1 to 10,
wherein an elastic modulus ratio between the model portion material and the support portion material is 20:1 or higher but 60:1 or lower.

**12.** A three-dimensional object producing apparatus comprising:

a model portion forming unit configured to form a model portion formed of a model portion material over a stage; and
a support portion forming unit configured to form a support portion formed of a support portion material at least over a surface of the stage and at a part or all of a circumference of the model portion in a plan-view perspective.

**13.** The three-dimensional object producing apparatus according to claim 12,

wherein the support portion forming unit is configured to form a support portion formed of the support portion material between the model portion located over the stage and the surface of the stage,
wherein the three-dimensional object producing apparatus further comprises an anchor portion forming unit configured to form an anchor portion formed of the model portion material at least over the surface of the stage in a manner that the anchor portion penetrates the support portion.

14. A three-dimensional object comprising:

a model portion formed of a model portion material and formed over a stage; and
a support portion formed of a support portion material and formed at least over a surface of the stage and at a part or all of a circumference of the model portion in a plan-view perspective.

15. A three-dimensional object production data generating method comprising:

identifying a model portion having a protruding portion protruding in a protruding direction orthogonal to a layer lamination direction and a support portion present at a position to contact the protruding portion in the layer lamination direction and protruding more than the protruding portion based on a three-dimensional model representing a three-dimensional object to be formed; and
setting an object forming procedure in a manner that such a portion of the support portion as protruding more than the protruding portion in the protruding direction of the protruding portion has a bump over a surface at a side at which the support portion contacts the protruding portion, and in a manner that a height of the bump is lower than a height of the protruding portion.

# FIG. 1

# FIG. 2A

100

# FIG. 2B

20

10

# FIG. 2C

# FIG. 3

# FIG. 4A

# FIG. 4B

# FIG. 5A

10a

10b

20b

Z

X or Y

# FIG. 5B

10a

Y

X

# FIG. 6A

# FIG. 6B

# FIG. 7A

# FIG. 7B

# FIG. 8A

# FIG. 8B

# FIG. 9A

10a

10d
10e
20a
10c

Z

X

# FIG. 9B

# FIG. 10

# FIG. 11A

# FIG. 11B

# FIG. 12A

# FIG. 12B

10a

60mm

5mm

Y

X

# FIG. 13A

# FIG. 13B

# FIG. 14A

# FIG. 14B

# FIG. 15A

# FIG. 15B

# FIG. 16A

10a

10b

Z

20b

X or Y

10c

# FIG. 16B

10a

Y

X

# FIG. 17A

# FIG. 17B

# FIG. 18A

# FIG. 18B

# FIG. 19A

# FIG. 19B

# FIG. 20A

# FIG. 20B

# FIG. 21A

# FIG. 21B

10a

60mm

5mm

Y

X

# FIG. 22A

# FIG. 22B

# FIG. 23A

# FIG. 23B

# FIG. 24

# FIG. 25

# FIG. 26

# FIG. 27

# FIG. 28

# FIG. 29

# FIG. 30

# FIG. 31

Length of
side burr

FIG. 32

600

**Object formation data generating apparatus**

601
CPU

602
Main memory
device

603
Auxiliary
memory device

604
Output
device

605
Input
device

606

# FIG. 33

```
        ┌─────────────┐
        │    Start     │
        └─────────────┘
               │
               ▼              ⟿S101
 ┌──────────────────────────────┐
 │  Three-dimensional model is   │
 │          accepted             │
 └──────────────────────────────┘
               │
               ▼              ⟿S102
 ┌──────────────────────────────┐
 │  Shape and size of support    │
 │        portion are set        │
 └──────────────────────────────┘
               │
               ▼              ⟿S103
 ┌──────────────────────────────┐
 │ Positions (locations) of model portion │
 │   and support portion are set  │
 └──────────────────────────────┘
               │
               ▼              ⟿S104
 ┌──────────────────────────────┐
 │ Object forming procedures for model │
 │ portion and support portion are set │
 └──────────────────────────────┘
               │
               ▼              ⟿S105
 ┌──────────────────────────────┐
 │ Two-dimensional data for forming one │
 │   object forming layer is generated  │
 │ according to object forming procedures │
 └──────────────────────────────┘
               │
               ▼
        ┌─────────────┐
        │     End      │
        └─────────────┘
```

**REFERENCES CITED IN THE DESCRIPTION**

**Patent documents cited in the description**

- WO 2015049834 A
- JP 2012096428 A